# EUROPÄISCHE PATENTSCHRIFT

(11) **EP 0 663 101 B1**
(45) Veröffentlichungstag und Bekanntmachung des Hinweises auf die Patenterteilung: **02.04.1997**
(21) Anmeldenummer: 94921570.1
(22) Anmeldetag: 18.07.1994
(51) Int. Cl.: H01B 13/02, G02B 6/44, D07B 3/00

(54) **EINRICHTUNG UND VERFAHREN ZUR VERSEILUNG LANGGESTRECKTER VERSEILELEMENTE**
PROCESS AND ARRANGEMENT FOR STRANDING ELONGATED ELEMENTS
PROCEDE ET DISPOSITIF PERMETTANT DE TORONNER DES ELEMENTS ALLONGES

(30) Priorität: 02.08.1993 DE 4325931
(43) Veröffentlichungstag der Anmeldung: 19.07.1995
(73) Patentinhaber: SIEMENS AKTIENGESELLSCHAFT, 80333 München (DE)
(72) Erfinder: LOCZENSKI, Martin, D-96465 Neustadt (DE)
(86) Internationale Anmeldenummer: DE9400826
(87) Internationale Veröffentlichungsnummer: WO9504361

(56) Entgegenhaltungen:
- EP-A- 0 529 610
- DE-A- 3 808 037
- PATENT ABSTRACTS OF JAPAN vol. 10, no. 243 (P-489) (2299) 21. August 1986 & JP,A,61 073 914 (FURUKAWA ELECTRIC CO. LTD.) 16. April 1986
- PATENT ABSTRACTS OF JAPAN vol. 10, no. 243 (P-489)(2299) 21. August 1986 & JP-A-61 073 914

## Beschreibung

Die Erfindung betrifft eine Einrichtung und ein Verfahren zur Verseilung langgestreckter Verseilelemente unter Verwendung eines sich in Längsrichtung erstreckenden, rotierenden Speicherkörpers, über den die Verseilelemente einer Verseilscheibe zugeführt sind.

Eine Einrichtung dieser Art ist aus der EP 0 151 367 B1 bekannt. Dort sind zusätzlich frei drehbare Führungslochscheiben auf einem Rohrspeicher vorgesehen, die gegenüber dem Rohrspeicher unabhängig angetrieben sind. Die Führungslochscheibe muß dabei als zusätzliches Element auf dem Rohrspeicher angebracht und gelagert werden. Durch sie werden die Verseilelemente von dem Rohrspeicher abgehoben, weil die Führungsbohrungen der Führungslochscheibe auf einem vergrößerten Teilkreisdurchmesser liegen.

Aus der DE-OS 24 11 151 ist ein Rohr bekannt, dessen Oberfläche extrem glatt ausgebildet sein soll. Hierzu kann das Rohr mit längs verlaufenden Rillen versehen sein, wobei die Verseilelemente während des Verseilens stets quer über die Rillen verlaufen und diese überbrücken.

Aus der EP A1 529 610 ist eine Verseileinrichtung bekannt, bei der für jedes Verseilelement ein allseits geschlossenes Rohr vorgesehen ist.

Der Erfindung liegt die Aufgabe zugrunde, den Aufbau einer Verseileinrichtung einfacher zu gestalten. Gemäß der Erfindung wird diese Aufgabe bei einer Einrichtung der eingangs genannten Art dadurch gelöst, daß der Speicherkörper radial nach außen oder innen offene Kammern aufweist, die sich in Längsrichtung des Speicherkörpers erstrecken und der Aufnahme der Verseilelemente dienen.

Somit übernimmt der Speicherkörper selbst die definierte Führung der Verseilelemente, wodurch nicht nur ein besonders einfacher Aufbau, sondern in vielen Fällen sogar eine verbesserte Wirkungsweise erzielbar ist. Durch die Verwendung offener Kammern wird insbesondere die Zugänglichkeit bzw. das Einlegen der Verseilelemente vereinfacht.

Die Erfindung betrifft auch ein Verfahren zur Verseilung langgestreckter Verseilelemente unter Verwendung eines sich in Längsrichtung erstreckenden, rotierenden Speicherkörpers, über den die Verseilelemente einer Verseilscheibe zugeführt werden, welches dadurch gekennzeichnet ist, daß die Verseilelement sich in Längsrichtung des Speicherkörpers erstreckenden, radial nach außben oder innen offenen Kammern des Speicherkörpers geführt werden.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Querschnittsdarstellung eine erfindungsgemäße Einrichtung
- Figur 2: die Einrichtung nach Figur 1 in einem tordierten Zustand,
- Figur 3: die Einrichtung nach Figur 1 in einer Einlegeposition,
- Figur 4: schematisch in teilweise perspektivischer, vergrößerter Darstellung den Speicherkörper der Einrichtung nach Figur 1 im untordierten Zustand,
- Figur 5: schematisch den Speicherkörper nach Figur 4 im tordierten Zustand,
- Figur 6: in schematischer Darstellung eine erste Abwandlung der Einrichtung nach Figur 1,
- Figur 7: eine zweite Abwandlung der Einrichtung nach Figur 1,
- Figur 8: ein ortsabhängiges Drehzahldiagramm für die Einrichtung nach Figur 7,
- Figur 9: eine weitere Abwandlung der Einrichtung nach Figur 1,
- Figur 10: vergrößert im Querschnitt den Speicherkörper der Einrichtung nach Figur 1, und
- Fig. 11-19: weitere Abwandlungen des Speicherkörpers nach Figur 1 bzw. Figur 10.

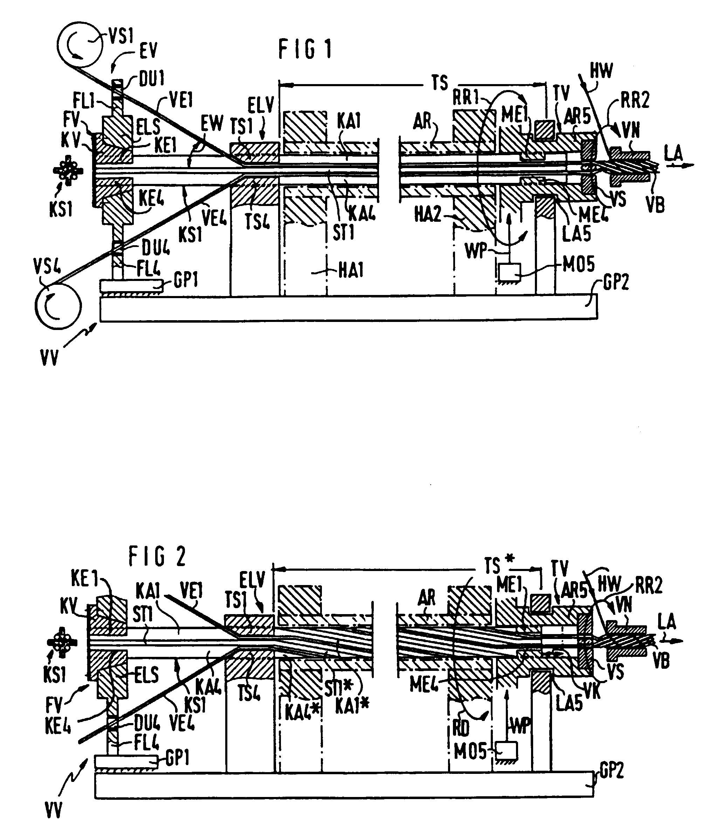

In Figur 1 sind beispielhaft vier feststehende Vorratsspulen VS1 mit VS4 einer erfindungsgemäßen Verseileinrichtung VV vorgesehen, von denen langgestreckte bzw. strangförmige Verseilelemente VE1 mit VE4 abgezogen werden. Im Querschnittsbild von Figur 1 sind dabei von den insgesamt 4 Vorratsspulen der Einfachheit halber nur zwei, nämlich die Vorratsspule VS1 und die Vorratsspule VS4 mit ihren zugehörigen Verseilelementen VE1 und VE4 dargestellt. Diese Vorratsspulen enthalten als langgestreckte Verseilelemente vorzugsweise elektrische und/oder optische übertragungselemente unterschiedlicher Größen, Aufbauten, Formen, Konfigurationen, usw. Dies können beispielsweise elektrische Leiter (Adern), optische Leiter, wie z.B. Lichtwellenleiter, Hohladern, Bündeladern usw., oder dergleichen sein. Vorzugsweise sind Verseilelemente mit runden, insbesondere kreisrunden, Querschnittsformen verwendet. Daneben kommen als Verseilelemente gegebenenfalls auch solche mit nichtrunden Querschnittsformen wie z.B. Lichtwellenleiter-Bändchenstapel bestückte U-Profilelemente, rechteckförmige Lichtwellenleiter-Bändchen, rechteckförmige Lichtwellenleiter-Bändchenstapel, usw. in Frage. Neben den Elementen auf dem Gebiet der Kaabeltechnik können vorteilhaft auch sonstige langgestreckte Güter wie z.B. Seile, Zugelemente, Garne, Bänder, Stränge oder dergleichen mit der erfindungsgemäßen Einrichtung verseilt werden. Die Verseilelemente werden über entsprechende, in Figur 1 der Übersichtlichkeit halber nicht dargestellte Abzugseinrichtungen einer feststehenden Einlaufvorrichtung EV zugeführt. Diese Einlaufvorrichtung EV ist in Figur 1 beispielhaft als ein feststehender, rotationssymmetrischer Führungsstern ausgebildet, der einen vorzugsweise scheibenförmigen Grundhalter ELS mit sich daran anschließenden, sich radial nach außen erstreckenden Stegen bzw. Flanschen FL1 mit FL4 aufweist. Die Einlaufvorrichtung EV ist z.B. über den Steg FL4 mit einer feststehenden Grundplatte GP1 fest verbunden. Die Flansche FL1 mit FL4 des Führungssterns weisen Durchgangsöffnungen DO1 mit DO4, vorzugsweise kreiszylinderförmige Bohrungen, als selektiv zugeordnete Führungen für die Verseilelemente VE1 mit VE4 auf. Auf diese Weise ergibt sich eine Art sternförmiger Lochkranz als Einlaufvorrichtung EV, mit dessen Hilfe die zu verseilenden Elemente VE1 mit VE4 gleichmäßig über den Umfang verteilt werden, d.h. in eine konzentrische sowie rotationssymmetrische Anordnung bezüglich ihrer gemeinsamen Verseilachse (Längsrichtung) LA gebracht werden. Im Ausführungsbeispiel von Figur 1 wird zur besseren Veranschaulichung beispielhaft nur auf vier Verseilelemente Bezug genommen. Die im folgenden dazu getroffenen Aussagen sind jedoch auch ohne Einschränkung auf beliebig viele, d.h. n-Verseilelemente mit n ≥ 1 übertragbar. In der Praxis ist also eine größere Anzahl, z.B. n=4 bis n=20 oder mehr, derartiger Verseilelemente vorgesehen.

Die Verseilung der strangförmigen Elemente VE1 mit VE4 erfolgt unter Zuhilfenahme eines drehbaren, sich in Längsrichtung LA erstreckenden, insbesondere geradlinig verlaufenden Speicherkörper KS1 für die Verseilelemente VE1 mit VE4. Der Speicherkörper KS1 selbst weist vier nach außen offene Kammern bzw. Kanäle KA1 mit KA4 zur Aufnahme und zur Führung der Verseilelemente VE1 mit VE4 auf, die jeweils durch Trennelemente, insbesondere Stege, voneinander getrennt sind. Es sind dabei vorzugsweise soviele Kammern vorgesehen wie Verseilelemente miteinander zu verseilen sind, wobei jede Kammer jeweils genau ein Verseilelement aufnimmt, d.h. den vier Kammern KA1 bis KA4 sind die vier Verseilelemente VE1-VE4 einzeln zugeordnet. Im Querschnittsbild von Figur 1 sind im untordierten Zustand des Speicherkörpers KS1 nur die beiden Kammern KA1 und KA4 sichtbar. Sie erstrecken sich in axialer Richtung parallel zur Längsachse LA des Speicherkörpers KS1 auf dessen voller Länge und sind durch den Steg ST1 voneinander getrennt. Insbesondere verlaufen die Kanäle KA1 mit KA4 im untordierten Zustand des Speicherkörpers KS1 in axialer Abzugsrichtung geradlinig. Zur besseren Veranschaulichung ist der als Kammerstrang ausgebildete Speicherkörper KS1 in Figur 1 links, im Bereich seines einlaufseitigen Endes zusätzlich mit seinem Querschnittsprofil (zusammen mit eingelegten, z.B. runden Leitern als Verseilelemente) gezeichnet, d.h. zusätzlich in einer zu Figur 1 senkrechten, um 90° herausgeklappten Zeichenebene dargestellt. Der Speicherkörper KS1 von Figur 1 weist ein kreuzförmiges rotationssymmetrisches Querschnittsprofil auf, bei dem die Kammern KA1 bis KA4 jeweils durch den Zwischenraum zwischen zwei benachbarten, aufeinander senkrecht stehenden Stegen gebildet und insbesondere radial nach außen offen sind. Die Kammern KA1 bis KA4 weisen vorteilhaft einen sich nach außen erweiternden Kammer-Querschnitt auf. Ihre Querschnittsform ist zweckmäßigerweise größer als der Profilquerschnitt der Verseilelemente gewählt.

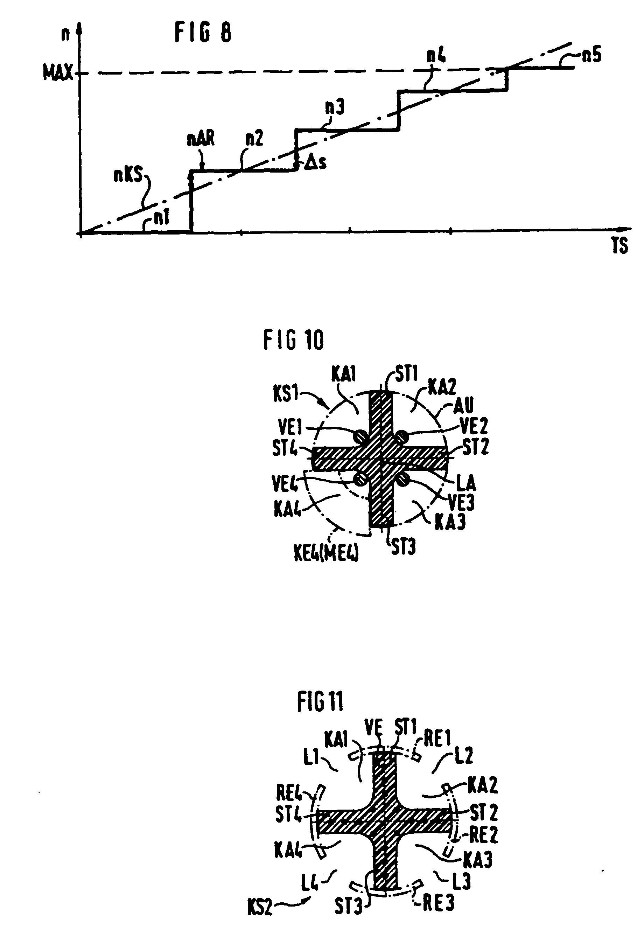

Figur 10 zeigt diesen sternförmigen, insbesondere kreuzförmigen Profilquerschnitt des Speicherkörpers KS1 von Figur 1 für die vier zu verseilenden Elemente VE1 bis VE4 nochmals in vergrößerter Darstellung. Die Verseilelemente weisen hier in Figur 10 vorzugsweise einen kreisrunden Querschnitt auf. Die Stege ST1 bis ST4 erstrecken sich jeweils radial nach außen. Sie sind so angeordnet, daß durch jeweils zwei gegenüberstehende Stege wie z.B. ST1, ST3 sowie ST4, ST2 ein durchgehender Vertikal- sowie ein Horizontalbalken gebildet ist. Jeweils zwei benachbarte Stege wie z.B. ST1, ST2 stehen also aufeinander senkrecht und schließen mit ihren Seitenwänden jeweils eine radial nach außen offene, im wesentlichen sich nach außen verbreiternde, sektorförmige Kammer z.B. KA2 zwischen sich ein. Deren Innenkontur entspricht etwa der Ecke eines gedachten Rechtecks. Zur Aufnahme der Verseilelemente VE1 bis VE4 sind die Kammern KA1 bis KA4 jeweils an ihrem Kammergrund abgerundet, um dort die Verseilelemente VE1 bis VE4 jeweils möglichst ohne Beanspruchungen oder gar Beschädigungen führen zu können.

Die im folgenden in der Beschreibung angegebenen relativen Maßangaben und Verhältnisgrößen beziehen sich jeweils bevorzugt auf die Viererverseilung von Nachrichtenadern aus Kupfer (Cu), insbesondere auf sogenannte "ICCS"-Produkte. (ICCS = "Integrated Communication Computer Systems"), gelten aber auch als Anhaltspunkte für vielfältige, weitere Ausführungsformen von Verseilelementen. Die absoluten Dimensionierungsangaben werden beispielhaft zu ein- und denselben Verseil elementen - runde Cu-Adern - mit einem Durchmesser zwischen 1,6 und 2 mm gemacht.

Die radiale Erstreckung der etwa gleichlangen Stege ST1 bis ST4 und damit der Außendurchmesser des Speicherkörpers wird (gemessen vom Zentrum des Speicherkörpers radial nach außen) zweckmäßigerweise jeweils zwischen 2 bis 12 mal, insbesondere zwischen 3 bis 8 mal, größer als die maximale Querschnittsbreite des jeweiligen Verseilelements gewählt. Bei "ICCS"-Cu-Adern mit etwa kreisförmigen Querschnitt, sind die Steglängen bevorzugt jeweils zwischen 4 und 6 mm gewählt. Die Kammertiefe ist vorteilhaft 2 bis 8 mal, bevorzugt 2,5 bis 4 mal größer als die maximale Querschnittsbreite des jeweiligen Verseilelements dimensioniert, wobei hier die Kammertiefe vom gedachten, strichpunktiert eingezeichneten, kreisförmigen Außenumfangs AU radial nach innen hin zum Kammergrund gemessen wird. Bei der Verseilung von runden Cu-Adern mit einem Durchmesser zwischen 1,6 und 2 mm ist vorteilhaft eine Kammertiefe zwischen 4 und 6 mm vorgesehen.

Zweckmäßig kann es sein, die jeweilige Kammer möglichst tief zu dimensionieren, damit die Verseilelemente VE1 bis VE4 möglichst nahe an der sich geradlinig erstreckenden Längs- bzw. Verseilachse LA geführt sind. Aufgrund dieser zentrumsnahen, d.h. drehachsennahen Lage der Verseilelemente VE1 bis VE4 können Zentrifugalkräfte während der Verseilung weit weniger auf die Verseilelemente VE1 bis VE4 wirksam werden oder sogar nahezu vollständig vernachlässigt werden. Die Verseilelemente VE1 bis VE4 werden also in den Kammern bzw. Öffnungen KA1 bis KA4 vorzugsweise mit möglichst geringem Abstand zur gemeinsamen Verseilachse (Längsachse) LA geführt, d.h. sie liegen auf einem gedachten Teilkreis mit möglichst kleinem Radius. Vorteilhaft liegen die Verseilelemente VE1 bis VE4 jeweils am Kammergrund mit einem Abstand zwischen dem 1,5- bis 2-fachen ihrer maximalen Querschnittsbreite zum Mittelpunkt des rotationssymmetrischen Speicherkörpers. Bei im Querschnitt kreisrunden Verseilelementen entspricht die maximale Querschnittsbreite der Verseilelemente somit ihrem Kreis-Durchmesser. Insbesondere wird ihr Abstand (Teilkreisradius) zur gemeinsamen Verseilachse LA kleiner als 2,4 bis 4,0 mm, insbesondere um 1,8 mm bei etwa kreisrunden Verseilelementen (Cu-Adern), gewählt. Die Kammerbreite wird zweckmäßigerweise jeweils um den Umfang gesehen um mindestens das 2-fache, insbesondere um das 6 bis 9-fache, größer als die maximale Querschnittsbreite des jeweiligen Verseilelements dimensioniert. Bevorzugt wird die Kammerbreite jeweils zwischen 3,2 und 18 mm, insbesondere zwischen 10 und 14 mm, bei der Verseilung kreisrunder Verseilelemente (Cu-Adern) mit einem Durchmesser zwischen 1,6 und 2,0 mm eingestellt. Gleichzeitig wird aufgrund dieser vorzugsweise möglichst weit zur Verseil- bzw. Drehachse LA hineinreichenden Öffnungen auch ein günstiges dynamisches Verhalten des Speicherkörpers KS1 während der Verseilung sichergestellt: Dieser weist vorteilhaft so z.B. nur geringe Trägheitsmomente (wie z.B. ein niedriges Massen-Trägheitsmoment sowie Torsionsmoment), geringe Wandstärken seiner Stege, insgesamt eine geringe Schwungmasse sowie einen kleinvolumigen, gedrängten Aufbau auf. Durch die möglichst drehachsennahe Lage sowie Führung der Verseilelemente verbleiben diese auch im wesentlichen während der Tordierung des Speicherkörpers, d.h. der Verseilung am Kammergrund. Ein Hinauswandern der Verseilelemente aus den Kammern bzw. deren Abheben aufgrund von Fliehkräften ist somit weitgehend vermieden, so daß sie getrennt bzw. separat voneinander in den Kanälen geführt werden können. Es wird somit vorteilhaft eine verbesserte Wirkungsweise des Verseilvorgangs sichergestellt.

In Figur 1 ist vorzugsweise am einlaufseitigen, linken Ende des Speicherkörpers KS1 eine Fixiervorrichtung FV vorgesehen, mittels der er dort in Umfangsrichtung verdrehfest fixiert ist. In Figur 1 ist diese Fixiervorrichtung FV durch ein konusförmiges, sich in Durchlaufrichtung verjüngendes Klemmteil bzw. eine Klemmvorrichtung KV gebildet, das zentrisch in der Einlaufvorrichtung EV nicht drehbar fest eingespannt ist. Die Verdrehsperre bzw. -Arretierung (= Torsionssperre) des Speicherkörpers KS1 in Umfangsrichtung wird dadurch erreicht, daß das starre konusförmige Klemmteil KV stegartige, sich in Längsrichtung erstreckende Klemmelemente KE1 bis KE4 aufweist, die in die Aufnahmekammern KA1 bis KA4 jeweils zumindest teilweise oder ganz hineinragen und dort um den Umfang gesehen im wesentlichen formschlüssig festsitzen. Dazu weisen die Klemmelemente KE1 bis KE4 etwa eine Profil- Querschnittsform auf, deren Außenkontur im wesentlichen der Innenkontur der Kammern KA1 bis KA4 (vgl. Fig. 10) entspricht.

In Figur 10 ist zur Veranschaulichung ein derartiges Klemmelement z.B. KE4 strichpunktiert zusätzlich mit eingezeichnet. Das Klemmelement KE4 reicht zweckmäßigerweise etwa auf einem Drittel der Kammertiefe in die Kammer KA4 hinein. Es weist insbesondere in etwa die Form eines Torusabschnitts auf, bzw. ist es sektor- oder trapezförmig ausgebildet und füllt die Kammeröffnung KA4 zumindest teilweise aus. Es sitzt zwischen den beiden Stegen ST4 und ST3 mit etwas seitlichem Spiel derart, daß eine Klemmwirkung in Umfangsrichtung erreicht ist, so daß der Speicherkörper verdrehfest festgehalten ist. Zweckmäßigerweise wird dabei der Speicherkörper KS1 auf einer axialen Länge zwischen 0,5 und 0,75 % seiner Gesamtlänge von der Fixiervorrichtung FV verdrehfest festgehalten, insbesondere zwischen 50 und 75 mm. Die Kammerbreite wird vorteilhaft etwas größer als die jeweilige Stegbreite der Klemmelemente um den Umfang gesehen gewählt, so daß ausreichend seitliches Spiel vorhanden ist, um den Speicherkörper KS1 gegebenenfalls z.B. bei der Demontage aus der Fixiervorrichtung FV noch in axialer Richtung herausziehen bzw. bei der Montage in die Verseileinrichtung axial hineinfahren zu können.

Das konusförmige Klemmteil KV von Figur 1 sitzt während des Betriebes in axialer Richtung mit einer Art Paßsitz bzw. formschlüssig in der konusförmig zulaufenden Durchgangsöffnung des feststehenden Grundhalters ELS fest, so daß eine ortsfeste, starre Lagerung für den Speicherkörper KS1 an seinem einlaufseitigen Ende gebildet ist. Der Speicherkörper KS1 ist für den Betrieb zusätzlich an seiner eingangsseitigen Stirnseite fest am Klemmteil KV lagegesichert. Dies kann beispielsweise in einfacher Weise dadurch erreicht werden, daß der Speicherkörper KS1 an seiner einlaufseitigen Stirnseite einen sich radial nach außen erstreckenden RückhalteFlansch aufweist, der das Klemmteil KV hintergreift. Auf diese Weise ist für das Klemmteil KV und damit den Speicherkörper KS1 zusätzlich eine Sperre bzw. Arretierung gegen Verschieben in axialer Durchlaufrichtung (Längsrichtung) LA bewirkt. Sein einlaufseitiges Ende, stellt somit einen starren Fest- bzw. Fixpunkt in Längsrichtung sowie in Umfangsrichtung für den übrigen Längsteil des Speicherkörpers dar.

Demgegenüber läßt sich sein anderes, gegenüberliegendes Ende frei in Umfangsrichtung verdrehen sowie ungehindert in Längsrichtung verlängern, bzw. verkürzen läßt. Gegebenenfalls kann es auch zweckmäßig sein, die Verdrehfixierung nicht am eingangsseitigen Ende, sondern an einer Stelle des Speicherkörpers KS1 anzubringen, die noch eine ausreichend tordierbare Restlänge für eine gewünschte Speicherstrecke übrig läßt. So kann die Verdrehfixierung vorzugsweise in der linken oder rechten Teilhälfte des Speicherkörpers vorgesehen sein, insbesondere an einem seiner beiden Enden.

Um die Verseilelemente VE1 bis VE4 in die radial nach außen offenen Kammern KA1 bis KA4 des Speicherkörpers für die Verseilung einbringen zu können, ist der Fixiervorrichtung FV eine Einlegevorrichtung ELV nachgeordnet. Diese Einlegevorrichtung ELV ist mit einer feststehenden Grundplatte GP2 fest verbunden. Sie umgibt den Speicherkörper KS1 ringförmig bzw. in Form eines Zylinders. Sie greift mittels Einlegeelemente, insbesondere Stege TS1 bis TS4, jeweils teilweise in die Kammern KA1 bis KA4 ein und drückt dadurch die unter Zugspannung einlaufenden Verseilelemente VE1 bis VE4 in die zugeordneten Kammern KA1 bis KA4. Die Verseilelemente legen sich am jeweiligen Kammergrund vorzugsweise gespannt an und werden in dessen Nähe auch während des Betriebes gehalten. Die Stege TS1 bis TS4 sind im wesentlichen entsprechend den Klemmelementen KE1 bis KE4 ausgebildet. Sie sitzen in den Kammern KA1 bis KA4 im wesentlichen formschlüssig und damit in Umfangsrichtung verdrehsicher fest (vgl. KE4 in Figur 10), so daß durch die Einlegevorrichtung ELV eine Torsionssperre für den Speicherkörper KS1 gebildet ist. Zu diesem Zweck weisen die Einlegeelemente eine Stegbreite in Umfangsrichtung auf, die etwa der Kammerbreite in Umfangsrichtung betrachtet, entspricht. Um die unter einem Einlaufwinkel EW (gemessen jeweils zwischen ihrer einlaufseitigen Abzugsrichtung vor der Einlaufvorrichtung ELV und ihrer Verseilachse LA) ankommenden Verseilelemente VE1 bis VE4 möglichst schonend aus ihrer konzentrischen, drehachsenfernen Spulen-Anordnung in den drehachsennahen Längsverlauf der Kammern KA1 bis KA4 zu überführen, sind die Stege TS1 bis TS4 in ihrem Einlaufbereich jeweils in Durchlaufrichtung abgeschrägt. Auf diese Weise ist jeweils eine Art Rampe, d.h. eine abgeschrägte Einführöffnung für die einlaufenden Verseilelemente VE1 bis VE4 gebildet ist. Die Stege TS1 bis TS4 reichen zweckmäßigerweise soweit in die jeweilige Kammer KA1 bis KA4 hinein, daß das jeweilige Verseilelement VE1 bis VE4 am Kammergrund zu liegen kommt. Die Einlaufschräge der Stege TS1 bis TS4 wird zweckmäßigerweise derart gewählt, daß der Einlaufwinkel EW für die Verseilelemente zwischen 5 und 30 ° liegt. Die Stege TS1 bis TS4 ragen zweckmäßigerweise auf einer Länge zwischen 20 und 30 % der vollen Kammertiefe hinein. Insbesondere wird ihre Steghöhe zwischen 2 und 25 mm gewählt. Gegebenenfalls kann die Einlegevorrichtung ELV auch drehbar gelagert sein, so daß sie vom Speicherkörper KS1 in die jeweilige Drehrichtung mitgenommen wird. Dabei stellt die Fixiervorrichtung FV am einlaufseitigen Ende des Speicherkörpers KS1 die Verdrehsperre dar, so daß vorteilhaft nahezu die gesamte bzw. volle Länge des Speicherkörpers für die Verseilung ausgenutzt werden kann.

Im untordierten Zustand des Speicherkörpers KS1 erstrecken sich die Kammern KA1 bis KA4 geradlinig, etwa parallel zur Längsachse LA des Speicherkörpers KS1, wobei sie konzentrisch, aber möglichst drehachsennah zur Verseilachse LA im Profil bzw. Strang des Speicherkörpers eingelassen sind. Im untordierten Zustand weist der Speicherkörper KS1 zweckmäßigerweise eine Länge zwischen 5 und 10 m, insbesondere zwischen 6 und 8 m, auf.

Die Verseilung erfolgt durch den Speicherkörper KS1, indem dieser mit wechselnder Drehrichtung (SZ-Verseilung) tordiert wird. Die alternierende Rotationsbewegung des Speicherkörpers KS1 ist in Figur 1 mit einem Doppelpfeil RR1 angedeutet. Um den Speicherkörper KS1 als Torsionsstab betreiben zu können, ist eine Tordiervorrichtung TV an seinem ausgangsseitigen, (rechten) Ende vorgesehen. Diese Tordiervorrichtung TV weist ein konzentrisch zum Speicherkörper KS1 angeordnetes Tragrohr AR5 auf, das in einem Lager LA5, wie z.B. einem Luft-, Gleit- oder Kugellager, frei drehbar gelagert ist. Dieses Tragrohr AR5 greift mittels sich radial nach innen weisenden Mitnehmerelemente ME1 bis ME4 im wesentlichen formschlüssig (in Umfangsrichtung betrachtet) in die Öffnungen der Kammern KA1 bis KA4 ein, um das ausgangsseitige Ende des Speicherkörpers KS1 in die jeweilis gewünschte Drehrichtung unmittelbar mitnehmen und dadurch den Speicherkörper KS1 tordieren zu können. Die Mitnehmerlemente ME1 bis ME4 weisen im Querschnittsbild von Figur 1 etwa Rechteckform auf. Sie sitzen vorzugsweise auf einer axialen Länge zwischen 0,1 und 0,65 % der Gesamtlänge des untordierten Speicherkörpers KS1 fest. Vorzugsweise weisen sie eine axiale Länge zwischen 50 und 55 mm auf.

In Figur 10 ist zur Veranschaulichung des Querschnittsprofils der Mitnehmerelemente ME1 bis ME4 in einer zu Figur 1 senkrechten, um 90° herausgeklappten Zeichenebene beispielhaft das Mitnehmerelement ME4 in der Kammer KA4 strichpunktiert angedeutet. Es ist im wesentlichen entsprechend dem Klemmelement KE4 ausgebildet und weist eine etwa trapezförmige Gestalt auf. Es ragt dabei soweit in die Kammer KA4 hinein, daß das Verseilelement VE4 noch mit ausreichendem Spiel am Kammergrund hindurchgezogen werden kann. Die Außenkontur des Mitnehmerelements ME4 ist zweckmäßigerweise der Innenkontur der Kammer KA4 angepaßt, so daß es in etwa form- bzw. paßförmig, in die Kammer KA4 zwischen den beiden Stegen ST3 und ST4 eingreift.

Auf diese Weise ist in Figur 1 eine feste Ankopplung bzw. Verdrehfixierung des Kammerkörpers KS1 mit dem rotierend angetriebenen Tragrohr AR5 gebildet ist. Dabei ragt das Mitnehmerelement ME4 mit etwas seitlichem Spiel zu den Seitenwänden bzw. Stegen ST3 und ST4 in die Kammer KA4 hinein, so daß sich der Speicherkörper KS1 bei seiner Tordierung bzw. Verwindung während des Verseilvorganges in axialer Richtung ungehindert verkürzen und bei seiner Ent- bzw. Rücktordierung wieder verlängern kann. Auch ist dadurch vorteilhaft ein Auswechseln des Speicherkörpers wesentlich vereinfacht, da er axial verschiebbar ist und sich aus der Verseileinrichtung VV in axialer Richtung in einfacher Weise herausziehen läßt. Das ausgangsseitige Ende des Speicherkörpers läßt sich im Betrieb somit in Umfangsrichtung frei verdrehen sowie in axialer Richtung ungehindert verkürzen bzw. verlängern. Gegebenenfalls kann es auch zweckmäßig sein, die Tordiervorrichtung TV von Figur 1 am einlaufseitigen Ende und die Torsionssperre am auslaufseitigen Ende des Speicherkörpers KS1 vorzusehen, wobei dann der Speicherkörper KS1 einlaufseitig drehbar gelagert ist.

In Figur 1 ist als Antriebseinrichtung für die Tordiervorrichtung TV ein Motor MO5 vorgesehen, der am Tragrohr AR5 eingangsseitig angreift, was durch einen Wirkpfeil WP angedeutet ist. Der Motor MO5 treibt zweckmäßigerweise über einen in Figur 1 der Übersichtlichkeit halber nicht eingezeichneten Zahnriemen ein an der Tordiervorrichtung TV angebrachtes Zahnrad und damit den Speicherkörper KS1 an.

Im Tragrohr AR5 sitzt ausgangsseitig eine Verseilscheibe VS fest, die gemeinsam mit dem Tragrohr AR5 und dadurch auch gemeinsam, d.h. synchron, mit dem Speicherkörper KS1 rotiert. Die Verseilscheibe VS weist in Figur 1 vier, im Querschnitt etwa kreisrunde Durchgangsbohrungen auf, in denen die Verseilelemente VE1 bis VE4 vorzugsweise mit etwas Spiel geführt sind. Diese Durchgangsbohrungen sind auf einem Teilkreis um die Verseilachse sowie mit vorzugsweise mit dem gleichen Umfangswinkel gegeneinander versetzt angeordnet. Sie weisen jeweils im wesentlichen den selben radialen Abstand von der Außenoberfläche des Speicherkörpers auf. Auf diese Weise bildet die Verseilscheibe VS eine Art symmetrischen Lochkranz, der die Verseilelemente VE1 mit VE4 gleichmäßig bzw. gleichberechtigt ohne langgestrecktes Zentralelement, insbesondere zu einem symmetrischen "Sternvierer", miteinander verseilt.

Demgegenüber kann es gegebenenfalls auch zweckmäßig sein, anstelle eines der Verseilelemente ein langgestrecktes Kern- oder Zentralelement in einen der Führungskanäle KA1 mit KA4 einzulegen. Dieses wird dann vorzugsweise durch eine zusätzliche(, der Übersichtlichkeit halber in den Figuren 1 mit 3 nicht eingezeichnete,) Durchgangsbohrung im Zentrum der Verseilscheibe VS hindurchgeführt. Dies ist dadurch ermöglicht, daß zwischen dem stirnseitigen, rechten Ende des Speicherkörpers KS1 und der Verseilscheibe VS ein Hohlraum bzw. Zwischenraum verbleibt, in dem das Kernelement von außen auf die zentrale Durchgangsbohrung zulaufen kann. Auf dieses zentral geführte Kernelement werden dann die Verseilelemente vorteilhaft aufgeseilt. Ein derartiges Kernelement kann bevorzugt von der gleichen Art wie die übrigen aufzubringenden Verseilelemente sein. Genauso kann es u.U. zweckmäßig sein, als Kernelement von den übrigen Verseilelementen verschiedene, langgestreckte Güter, wie z.B. ein zugfestes Zentralelement, zu verwenden. Gegebenenfalls kann ein solches Umseilen eines Kernelements mit Verseilelementen auch dadurch erreicht werden, daß eine entsprechende Adapter- bzw. Verteilerscheibe in Durchlaufrichtung betrachtet in (Durchlaufrichtung) nach der Verseilscheibe VS von Figur 1 zusätzlich vorgesehen ist. Eine derartige Verteilerscheibe ist entsprechend der Verseilscheibe VS von Figur 1 in der Art eines Lochkranzes aufgebaut, weist jedoch zusätzlich im Zentrum eine Durchgangsbohrung für das Kernelement auf. Der Übersichtlichkeit halber ist eine derartige, zusätzliche Verteilerscheibe in Figur 1 weggelassen worden.

Nach dem Verlassen der Verseilscheibe VS gelangen die Verseilelemente VE1 bis VE4 zu einem Verseilnippel VN, wobei das so entstehende verseilte Bündel VB mit Hilfe einer Haltewendel HW fixiert wird. Die Haltewendel HW wird dabei wendelförmig um das Bündel VB herumgeschlagen, was mit einem Pfeil RR2 angedeutet ist. Anschließend wird das mit der Haltewendel HW versehene Bündel VB weiteren, hier nicht dargestellten Verarbeitungseinrichtungen, wie z.B. weiteren Verseileinrichtungen oder einem Extruder zum Aufbringen eines Außenmantels zugeführt.

Der Speicherkörper KS1 weist also in Figur 1 ausgangsseitig ein freies Ende auf, das rotierend angetrieben ist, während er eingangsseitig nicht drehbar, d.h. verdrehfest fest eingespannt gehalten ist. Dadurch läßt sich der Speicherkörper KS1 bevorzugt als Torsionsstab betreiben, dessen Länge sich in Längsrichtung selbsttätig bzw. frei einstellen kann: Dabei verkürzt er sich bei Zunahme und verlängert sich bei Abnahme der Tordierung. Somit wirkt der Speicherkörper KS1 entlang seiner Tordierstrecke TS als sogenannter "atmender Speicher".

Da die Kammern KA1 bis KA4 im untordierten Zustand des Speicherkörpers KS1 von Figur 1 möglichst in unmittelbarer Nähe sowie parallel zu der Verseilachse LA verlaufen, sind die auf sie wirkenden Zentrifugalkräfte verringert oder gar minimiert. Auf diese Weise ist weitgehend dafür gesorgt, daß die Verseilelemente VE1 bis VE4 im Bereich der Kammerböden auch in kritischen Betriebszuständen während der Verseilung verbleiben. Deshalb können die Kammern KA1 bis KA4 auch zumindest bereichsweise oder ganz entlang der Längserstreckung des Speicherkörpers KS1 unabgedeckt bleiben. Die eigentliche Tordierstrecke (Speicherstrecke) TS des Speicherkörpers KS1 erstreckt sich dabei von der als Torsionssperre wirkenden Einlegevorrichtung ELV bis etwa zu den Mitnehmerelementen der Tordiervorrichtung TV. Dabei ist der Speicherkörper KS1 in der Mitte seiner Tordierstrecke durchbrochen dargestellt, um anzudeuten, daß der eigentliche Speicherkörper KS1 wesentlich länger als in der schematischen Darstellung von Figur 1 dargestellt ist. Die Verseilelemente VE1 bis VE4 werden in diesen nach außen offenen Kammern KA1 bis KA4 im Außenmantel des Speicherkörpers dann während der Verseilung bzw. Tordierung des Speicherkörpers KS in einer Art Kanal getrennt voneinander geführt, so daß dem jeweiligen Verseilelement ein spezifischer Wegverlauf zugeordnet ist. Dadurch können die Verseilelemente VE1 bis VE4 auch nicht unzulässige Bewegungen ausführen, wie z.B. vom Kammergrund abheben und in unzulässige Positionen gelangen. Vielmehr verbleiben sie stets getrennt voneinander in ihrer jeweiligen zugeordneten Kammer. So ist vorteilhaft weitgehend vermieden, daß sich benachbarte Verseilelemente z.B. berühren, durcheinandergeraten, oder sich gar während der Tordierung des Speicherkörpers KS1 miteinander verflechten können. Vorzgusweise durch freie Führung der Verseilelemente VE1 bis VE4 in den Kammern KA1 bis KA4 ist diesen ermöglicht, auch in gewissem Umfang eine Rückdrehung auszuführen. Denn sie sind in ihren Kammern mit Spiel geführt, so daß sie dadurch Ausgleichsbewegungen ausführen können. Insbesondere können sie am jeweiligen Kammergrund oder den Kammer-Innenwänden zumindest teilweise abrollen. Die Verseilelemente VE1- VE4 laufen durch die Kanäle bzw. Kammern KA1-KA4 somit weitgehend eigentorsionsfrei. Indem die Kammern KA1 mit KA4 des Speicherkörpers KS1 von Figur 1 nach dem Einlegen der Verseilelemente VE1 mit VE4 zumindest teilweise oder ganz frei von Abdeckmitteln entlang der eigentlichen Speicherstrecke TS gehalten werden, ist ein günstiges dynamisches Verhalten des Speicherkörpers, insbesondere durch ein niedriges Torsionswiderstandssmoment sowie Massen-Trägheitsmoment, weitgehend sichergestellt. Weiterhin ist dadurch zugleich eine einfache visuelle Kontrolle des Verseilvorganges ermöglicht. Gleichzeitig wirkt der jeweils durch Torsion vorgespannte Speicherkörper KS1 als Federspeicher, der das Revisieren des Speicherkörpers KS1 bzw. der an ihn gekoppelten Verseilscheibe VS selbst mitunterstützt und seine Federenergie wieder in den Reversionsvorgang miteinbringt. Die Umkehrung der Drehrichtung der Verseilscheibe VS und des mit ihr fest verbundenen Speicherkörpers KS1 wird also durch die aufgrund der Torsion aufgebauten Rückfederungskraft beschleunigt. Es ergibt sich somit insgesamt betrachtet eine verbesserte Wirkungsweise des Verseilvorganges.

Für den Speicherkörper KS1 wird zweckmäßigerweise ein elastisch tordierbares Material gewählt, das torsionsfedernd wirkt. Insbesondere kommen dafür Federstahl (-Stäbe), Feder-Edelstahl, eloxiertes Aldrey, Glasfaser-Harz-Verbundelemente, Kohlenstoffaser-Harz-Verbundelemente, extrudierbarer Kunststoffe bevorzugt PE, PP, GI u.U. mit Faserverstärkungen in Längsrichtung des Speicherkörpers, oder sonstige Kunststoff-Kombinationen in Frage. Auf diese Weise ist der Speicherkörper in einfacher Weise sowie kostengünstig herstellbar und somit auch bei Verschleiß ohne allzu großen Aufwand austauschbar. Die Dimensionierung des Speicherkörpers erfolgt vorzugsweise nach der Torsionsbegrenzung des verwendeten Materials und den bei voller Besetzung des Speicherkörpers resultierenden Umschlingungswinkel. Die durch die Torsion und die Zugkraft der Verseilelemente auf den Speicherkörper wirksam werdende Gesamtspannung wird zweckmäßigerweise kleiner gleich 40 % seiner zulässigen Torsionswechselspannung gewählt. Die Eigensteifigkeit des Speicherkörpers KS1 wird vorteilhaft derart gewählt, daß eine gleichmäßige Ausbildung der Drallängen bzw. der Umschlingungen der Verseilelemente VE1 bis VE4 innerhalb der Speicherstrecke TS zwischen der Einlegevorrichtung ELV und der Tordiervorrichtung TV gewährleistet ist. Die Kammern KA1 bis KA4 laufen also gleichmäßig wendelförmig um die Verseilachse LA herum, d.h. ihre Ganghöhe ist bei der Torsion entlang der Torsionsstrecke TS etwa konstant.

Durch das stern-, insbesondere kreuzförmige Querschnittsprofil mit den kleinvolumigen Kammern KA1 bis KA4 weist der Speicherkörper KS1 vorteilhaft ein günstiges dynamisches Verhalten wie z.B. ein niedriges Massen- sowie Torsionsmoment auf, so daß er sich leicht verdrehen läßt. Bei sehr geringen Abständen der in den Kanälen geführten Verseilelemente zur Drehachse LA, insbesondere bei Abständen zwischen 1,5 und 6 mm, bevorzugt zwischen 3,5 und 5 mm, ergeben sich für die Umschlingungen der Verseilelemente VE1 bis VE4 vorteilhaft sehr große Krümungsradien, die eine geringe Reibung der Verseilelemente VE1 bis VE4 in den Kammern KA1 bis KA4 nach sich ziehen, was wiederum eine gleichmäßige Verteilung der Umschlingungen begünstigt.

Während Figur 1 den Speicherkörper KS1 im untordierten Zustand zeigt, d.h. zum Zeitpunkt zwischen einer Links- und einer Rechtstordierung, ist in Figur 2 der Zustand des Speicherkörpers KS1 von Figur 1 bei einer Tordierung im Uhrzeigersinn (= Rechtsdrehung in Durchlaufrichtung betrachtet) dargestellt. Die Rechtsdrehung ist mit einem Pfeil RD angedeutet. Unverändert übernommene Elemente aus Figur 1 sind mit den gleichen Bezugszeichen versehen. Es bildet sich die Tordier- bzw. Speicherstrecke TS, wobei es mit dem Speicherkörper KS1 nicht fest verbunden ist, zwischen der Einlegevorrichtung ELV und der Tordiervorrichtung TV aus, entlang der die Kammern KA1 bis KA4 mit den eingelegten Verseilelementen VE1 bis VE4 vorzugsweise gleichmäßig in Längsrichtung schraubenlinien- bzw. wendelförmig um die Verseilachse LA herumlaufen. In Figur 2 ist der Einfachheit halber nur der wendelförmige Verlauf der beiden Kanäle KA1 und KA4 mit den Bezugszeichen KA1* und KA4* sowie ihr sie trennender Steg mit dem Bezugszeichen ST1* gekennzeichnet. Dabei stellen die in die Kammern KA1 bis KA4 eingreifenden Stege TS1 bis TS4 der Einlegevorrichtung ELV eine linksseitige Torsionssperre bzw. feststehende (starre) Verdrehsperre sowie die Mitnehmerelemente ME1 bis ME4 der Tordiervorrichtung TV einen rechtsseitigen Verdrehantrieb für den Speicherkörper KS1 dar. Durch die Rechts-Tordierung verkürzt sich der Speicherkörper KS1 im Vergleich zu Figur 1 um eine Strecke TS - TS*. Vorzugsweise wird der Speicherkörper KS1 höchstens um 5 %, insbesondere um höchstens 1 % sowie bevorzugt um 0,2 bis 0,5 % seiner Gesamtlänge im untordierten Zustand verkürzt. Vorzugsweise verringert sich die Länge des Speicherkörpers KS1 um die Strecke VK zwischen 12 und 50 mm, insbesondere zwischen 12 und 50 mm.

Um ein etwaiges Ausweichen oder ein Ausknicken des torsionselastischen Speicherkörpers KS1 während seiner Tordierung möglichst zuverlässig vermeiden zu können, kann zumindest bereichsweise vorteilhaft mindestens ein Abdeck- bzw. Abstützmittel zusätzlich vorgesehen sein. In den Figuren 1 und 2 umgibt beispielsweise ein Außenrohr AR den Speicherkörper KS1 entlang nahezu seiner gesamten Speicher- bzw. Tordierstrecke konzentrisch, wobei es mit dem Speicherkörper KS1 nicht fest verbunden ist. Dieses Außenrohr AR ist in den Figuren 1 und 2 jeweils strichpunktiert angedeutet. Es ist mit Hilfe eines Halters HA1 zu Beginn der Speicherstrecke TS sowie mit eines Halters HA2 am Ende der Speicherstrecke TS feststehend auf der Grundplatte GP2 befestigt. Durch das feststehende, vorzugsweise kreiszylinderförmige Außenrohr AR wird der Speicherkörper KS1 nach außen hin abgestützt und kann deshalb auch nicht bei der Tordierung "korkenzieherartig" nach außen hin ausweichen bzw. durchhängen, d.h. der Speicherkörper KS1 behält auch im tordierten Zustand (vgl. Fig. 2) in etwa den gleichen konstanten Durchmesser entlang seiner axialen Erstreckung wie im untordierten Zustand (vgl. Fig. 1) bei. Insbesondere weist dazu das Außenrohr AR einen Innendurchmesser auf, der etwa dem Außendurchmesser des Speicherkörpers KS1 entspricht. Vorzugsweise umgibt das Außenrohr AR den Speicherkörper KS1 mit Spiel, um eine reibungsfreie Tordierung des Speicherkörpers KS weitgehend sicherstellen zu können. Gleichzeitig stellt das Außenrohr AR zusätzlich sicher, daß die Öffnungen der Kammern KA1 und KA4 nach außen hin abgedeckt sind und ihre Verseilelemente VE1 - VE4 nicht ihre Plätze in den Kammern KA1 - KA4 verlassen können, so daß eine besonders sichere Verseilung gewährleistet ist. Insbesondere ist im untordierten Zustand des Speicherkörpers, vorzugsweise z.B. bei Stillstand der Verseilvorrichtung sichergestellt, daß die in die offenen Kammern eingelegten Verseilelemente nicht aus den Kammern heraushängen oder gar herausfallen können. Somit ist weitgehend vermieden, daß bei einem etwaigen Abheben der Verseilelemente VE1 - VE4 vom Kammergrund diese jeweils eine unzulässige Position außerhalb ihrer jeweils zugeordneten Kammer KA1 - KA4 einnehmen. Wandern in kritischen Betriebszuständen gegebenenfalls die Verseilelemente VE1 - VE4 nach außen, so können sie am Innenmantel des konzentrisch angeordneten, stationären Außenrohres bzw. Abdeckrohres abrollen, aber nicht die slektiv zugeordneten Kammern KA1 - KA4 verlassen bzw. aus diesen herausspringen. Das Außenrohr AR dient also zusätzlich als Abdeckungsmittel für die radial nach außen offenen Kammern KA1 - KA4. Es verhindert zuverlässig, daß die Verseilelemente VE1 - VE4 ihre Kammern KA1 - KA4 verlassen, sich dann womöglich z.B. sogar im Außenraum überschlagen (verdrillen), z.B. dort womöglich durcheinander geraten oder sich sogar miteinander verflechten. Das Außenrohr AR ist vorzugsweise aufklappbar bzw. teilbar ausgebildet, so daß für die Montage bzw. das Einlegen der Verseilelemente in die jeweils zugeordneten Kammern der Speicherkörper KS1 frei zugänglich gemacht werden kann. Gegebenenfalls kann es zweckmäßig sein, das Außenrohr AR in Längsrichtung über den Speicherkörper KS1 hinweg abzuziehen, so daß die Kammern KA1 - KA4 unabgedeckt sind.

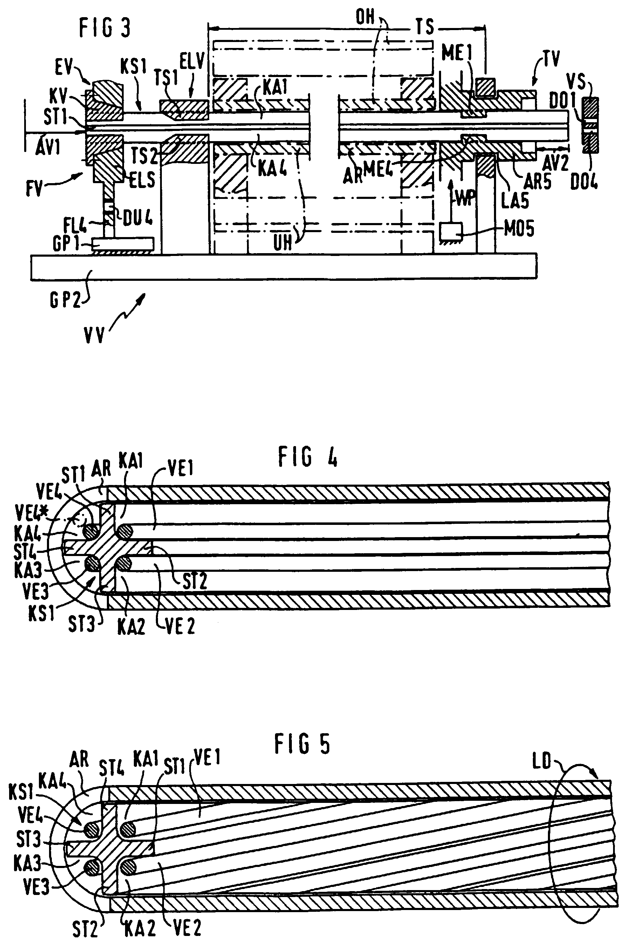

Figur 3 zeigt, wie die Verseileinrichtung VV nach den Figuren 1 bzw. 2 mit den Verseilelementen VE1 - VE4 belegt werden kann. Im einzelnen wird dabei so verfahren, daß nach Entfernen des Außenrohres AR zunächst die Verseilscheibe VS aus der Tordiervorrichtung TV stirnseitig entnommen wird. Zur Veranschaulichung dazu ist die Verseilscheibe VS in Figur 3 in der gedachten Verlängerung des Speicherkörpers KS1 gezeichnet. Dann wird der Speicherkörper KS1 in axialer Richtung, d.h. in Durchlaufrichtung LA, um einen Verschiebeweg AV1 verschoben. Zu diesem Zweck ist die Grundplatte GP1 mit der Fixiervorrichtung FV axial verschiebbar ausgebildet, so daß der Speicherkörper KS1 gegenüber seiner Arbeitsposition in den Figuren 1 bzw. 2 um den Verschiebeweg AV1 nach rechts bewegt werden kann. Dabei ragt er mit seinem ausgangsseitigen Ende um eine Strecke AV2 aus der Tordiervorrichtung TV hervor, so daß dieses Ende frei zugänglich und damit der Einfädelvorgang der Verseilelemente im Bereich der Tordiervorrichtung TV besser handhabbar wird. Zweckmäßiger Weise wird der Verschiebeweg AV1 zwischen 250 und 300 mm gewählt. Die Strecke AV2 ist zwischen 220 und 270 mm für die freie Zugänglichkeit des ausgangsseitigen Endes des Speicherkörpers KS1 zweckmäßig. Anschließend werden die Verseilelemente VE1 - VE4 von ihren Vorratsspulen kommend (vgl. Fig.1) in die nach außen offenen und damit frei zugänglichen Kammern KA1 - KA4 des untordierten Speicherkörpers KS1 eingelegt. Dabei ist durch die freie Zugänglichkeit der Kammern KA1 - KA4 nahezu auf der gesamten Länge des Speicherkörpers KS1 die Handhabbarkeit der Verseilelemente VE1 - VE4 beim Einlegen wesentlich erleichtert. Ein kompliziertes Einfädeln der Verseilelemente in die Kanäle entfällt vorteilhaft, da sie nicht rundum geschlossen, sondern nach außen offen sind. Nur im Bereich der Einlegevorrichtung ELV sowie im Bereich der Tordiervorrichtung TV ist noch ein Durchfädeln der Verseilelemente auf einer sehr kurzen Länge durch die dort gebildeten "Tunnel" erforderlich, während der restliche Speicherkörper frei zugänglich ist. Vorteilhaft kann es auch sein, die Einlegevorrichtung ELV sowie die Tordiervorrichtung TV teilbar auszubilden, so daß diese zur Montage aufgeklappt werden können und der Speicherkörper KS1 auch noch dort frei zugänglich gemacht wird. Der Speicherkörper verbleibt vorzugsweise auf einer Länge zwischen 90 und 97 % seiner Gesamtlänge offen, d.h. frei zugänglich. Die Verseilelemente VE1 - VE4 werden schließlich durch die Durchgangsöffnungen DO1 - DO4 der Verseilscheibe VS hindurchgeführt, die Verseilscheibe VS wieder in die Tordiervorrichtung TV fest eingesetzt und der Speicherkörper in seine Arbeitsposition um die Strecke AV1 (nach links) zurückgefahren. Durch das Zurückschieben des Speicherkörpers KS1 wird wieder die Betriebsstellung erreicht.

Indem der Speicherkörper KS1 von Figur 3nur an seinem einlaufseitigen Ende verdrehfest fixiert ist und ein ausgangsseitiges freies Ende aufweist, kann er zudem vorteilhaft einfach sowie schnell ausgetauscht werden.

Bei Verwendung eines Außenrohres AR ist dieses zweckmäßigerweise zumindest abschnittsweise in eine erste Halbschale OH und eine zweite Halbschale UH teilbar ausgebildet. Zum Einlegen der Verseilelemente VE1 - VE4 können dann die beiden Halbschalen OH und UH nach außen weggeklappt werden, was in Figur 3 gestrichelt angedeutet ist, so daß der Speicherkörper KS1 in Figur 3 z.B. entlang der gesamten Speicherstrecke TS wieder frei zugänglich ist.

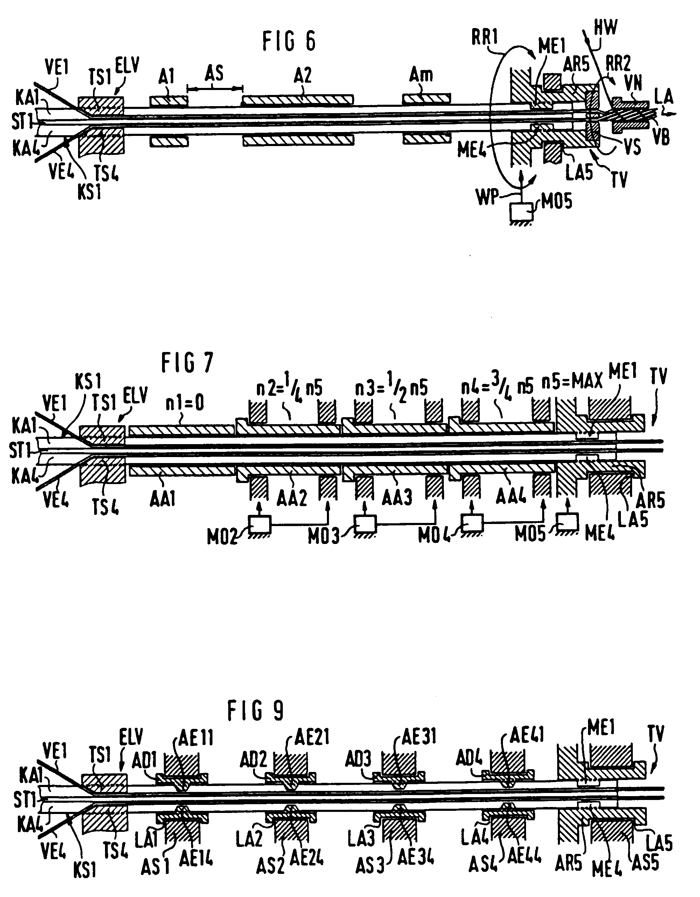

Die Figuren 4 und 5 zeigen den Speicherkörper KS1 zusammen mit dem Außenrohr AR gemäß der Figuren 1 und 2 in vergrößerter, teilweise perspektivischer Darstellung während des Betriebes. Unverändert übernommene Elemente aus den Figuren 1 mit 3 sowie Figur 10 sind mit den gleichen Bezugszeichen versehen. In Fig. 4 ist beispielhaft derjenige Zeitpunkt im Betrieb festgehalten, bei dem der Speicherkörper KS1 untordiert ist, d.h. zum Zeitpunkt maximaler Geschwindigkeit vor Beginn der erneut einsetzenden Tordierung. Als Verseilelemente VE1 bis VE4 liegen dabei runde Leiter, insbesondere Adern mit kreisrunden Querschnitt wie z.B. Cu-Leiter, unter Zugspannung am Boden der Kammern KA1 bis KA4 gestreckt an und werden dort auch möglichst gehalten.

Ausgehend von diesem untordierten Grundzustand des Speicherkörpers KS1 von Figur 4 erfährt dieser nun eine Tordierung entgegen dem Uhrzeigersinn, was durch einen Pfeil LD in Figur 5 angedeutet ist. In Figur 5 verwindet sich der Speicherkörper KS1 bei Blick in Abzugsrichtung LA (vgl. Figur 1) also mit einem Links-Drall, wobei die Kammern KA1 bis KA4 die Verseilachse etwa wendelförmig umlaufen. Dadurch speichern diese Verseilschläge entlang der Speicherstrecke (TS von Figur 1) und geben gleichzeitig den Verseilelementen VE1 bis VE4 eine spezifische Einlauflage zur Verseilung vor.

In den Kammern KA1 bis KA4 sind die Verseilelemente VE1 bis VE4 aufgrund der gegenüber sie im Profilquerschnitt größeren Kammern vorzugsweise weitgehend frei geführt, so daß sie selbst weitgehend drallfrei, d.h. ohne Eigentorsion, dem Verseilnippel VN zugeführt sind. Auf diese Weise ist vorzugsweise eine SZ-Verseilung mit weitgehender Rückdrehung der Verseilelemente ermöglicht. Vorteilhaft werden mit Hilfe des Speicherkörpers KS1 zwischen 10 und 30 etwa gleichverteilte Umschlingungen bzw. Schläge für die jeweilige Drehrichtung bei einer Tordierstrecke (TS von Figur 1) zwischen 4 und 10 m, insbesondere zwischen 6 und 8 m, gespeichert. Zweckmäßigerweise führt der Speicherkörper zwischen 8 und 40 Umdrehungen pro Drehrichtung, insbesondere zwischen 10 und 30 Umdrehungen pro Drehrichtung, vorzugsweise von etwa 16 Umdrehungen pro Drehrichtung aus. Bei der Tordierung des Speicherkörpers KS1 behalten die Verseilelemente VE1 bis VE4 im wesentlichen ihre Lage am Grund der Kammern KA1 bis KA4 bei.

In kritischen Betriebssituationen, wie z.B. bei Schwingungen des Speicherkörpers, versuchen die Verseilelemente VE1 bis VE4 gegebenenfalls vom Kammergrund nach außen hin abzuheben. Ein teilweises Hinauswandern kann hinsichtlich der gewünschten separaten Führung jedes einzelnen Verseilelementes zweckmäßigerweise aber bereits schon dadurch entschärft werden, daß die Kammertiefe entsprechend groß gewählt wird, so daß die Verseilelemente VE1 bis VE4 durch die Stege ST1 bis ST4 auch dann noch getrennt voneinander geführt werden, wenn sie in den Kammern etwas radial nach außen wandern und nicht mehr am Kammergrund anliegen. Ein Berühren oder Durcheinandergeraten benachbarter Verseilelemente ist somit bereits im wesentlichen vermieden. Das gegebenenfalls z.B. zusätzlich vorgesehene Außenrohr AR als Abdeckmittel sorgt zum einen dafür, daß der Speicherkörper von außen her um den Umfang gesehen abgestützt wird, d.h. versteift wird und somit während der Verseilung nicht seitlich ausbrechen kann. Der Speicherkörper KS1 ist dabei zweckmäßigerweise mit so großem Spiel im Außenrohr AR geführt, daß die Reibung zwischen dem Speicherkörper KS1 und dem Außenrohr AR möglichst klein gehalten ist. Zum anderen deckt das Außenrohr AR die offenen Kammern KA1 bis KAn jedoch gleichzeitig derart nach außen hin ab, daß die Verseilelemente VE1 bis VE4 an einem vollständigem Herausspringen aus ihren Kammern KA1 bis KA4 oder an einem Einklemmen zwischen dem Außenrohr AR und einem Steg wie z.B. ST1 des Speicherkörpers gehindert werden, d.h. sie können sich jeweils nur im Zwischenraum zwischen dem Innenmantel des Außenrohres AR und den Kammerwandungen der jeweiligen Kammer bewegen. Die Wahrscheinlichkeit für ein Abheben bzw. Abdriften der Verseilelemente ist insbesondere zum Zeitpunkt des untordierten Zustandes des Speicherkörpers größer als während der Zeitdauer in dessem tordierten Zustand, da zu diesem Umkehr-Zeitpunkt die Drehwinkelgeschwindigkeit und damit auch die wirksam werdenden Fliehkräfte am größten sind. Wird dennoch ein Verseilelement aus seiner Kammer ganz nach außen herausgeschleudert, so wird es durch das Außenrohr AR in seiner Kammer besonders zuverlässig zurückgehalten. In Figur 4 ist beispielsweise das Verseilelement VE4 vom Kammerboden abgehoben und liegt am Innenmantel des Außenrohres AR an. Diese Position des Verseilelementes ist in Figur 4 strichpunktiert angedeutet und mit dem Bezugszeichen VE4* versehen. Das Außenrohr AR ermöglicht dann vorteilhaft ein Abrollen des Verseilelements, bis es sich wieder am Kammerboden anlegt.

In Figur 6 wird der Speicherkörper KS1 in Abwandlung zum durchgängigen Außenrohr AR der zu den Figuren 1 mit 5 jeweils nur abschnittsweise von mehreren, in Längsrichtung aufeinanderfolgenden vorzugsweise kreiszylinderförmigen Außenrohren bzw. Abdeckrohren abgestützt bzw. abgedeckt, während er jeweils im Zwischenabschnitt (Lücke) zwischen zwei benachbarten Außenrohren offen und damit frei zugänglich bleibt. Unverändert übernommene Elemente aus den Figuren 1 mit 3 sind jeweils mit den gleichen Bezugszeichen versehen. In Figur 6 sind insgesamt von m Außenrohren, die als bereichsweise Abdeck- bzw. Abstützmittel dienen, entlang der Speicherstrecke der Einfachheit halber nur drei gezeichnet, und zwar die Außenrohre A1, A2 und Am. Die Abdeck- bzw. Außenrohre A1 bis Am sind dabei zweckmäßigerweise als eigenständige, stationäre (feststehende) Bauelemente vorgesehen, die den Speicherkörper KS1 konzentrisch mit Spiel bzw. einem Spalt umgeben und mit ihm nicht fest verbunden sind, d.h. die Außenrohre A1 mit Am sind von dre Drehbewegung des Speicherkörpers KS1 entkoppelt. Zweckmäßigerweise weisen zwei benachbarte Außenrohre wie z.B. A1, A2 jeweils einen Abstand AS in Längsrichtung, d.h. eine Lücke, zwischen 0,2 und 1,5 m, insbesondere zwischen 0,4 und 1,0 m zueinander auf. Ihre Abdecklänge ist bevorzugt zwischen 10 und 100 mm gewählt, d.h. sie sind vorzugsweise ring- bzw. scheibenförmig ausgebildet. Insbesondere sind die Kanäle bzw. Kammern in axialer Richtung jeweils auf einer Länge zwischen 3 und 10 % der Gesamtlänge des Speicherkörpers von den Abstützmitteln abgedeckt, d.h. die Kanäle bleiben insgesamt betrachtet, vorzugsweise auf einer Länge zwischen 90 und 97 % ihrer Gesamtlänge offen. Die Kanäle bleiben insbesondere auf einer Länge zwischen 5 und 9 m offen. Die nur abschnittsweise angebrachten, insbesondere ggf. als Führungsscheiben bzw. Führungsringe ausgebildeten Außenrohre A1 bis Am sorgen weitgehend dafür, daß der Speicherkörper KS1 auch während seiner Tordierung einen geradlinigen Verlauf aufweist, d.h. nicht seitlich ausbricht. Gleichzeitig bilden die Außenrohre A1 bis Am auch bereichweise Abdeckmittel bzw. Abdeckungen für die Kammern KA1 bis KA4 und sichern somit zuverlässig die Lage der Verseilelemente VE1 bis VE4, d.h. die Verseilelemente VE1 bis VE4 bleiben in allen Betriebssituationen sowie im Stillstand bzw. im Montagefall der Verseilvorrichtung stets voneinander separiert. Sie werden also stets selektiv entlang der Speicherstrecke geführt, d.h. sie verbleiben in ihren Kammern KA1 bis KA4 und können aus diesen nicht mehr herausfallen. Dabei verbleiben die Abschnitte des Speicherkörpers zwischen zwei benachbarten Außenrohren stets frei zugänglich, was das Einlegen bzw. Einfädeln neuer Verseilelemente bei der Montage wesentlich vereinfacht. Ein Entfernen der Außenrohre A1 - Am ist somit vorteilhaft nicht eigens erforderlich.

In Figur 7 sind in weiterer Abwandlung zu den Figuren 1 mit 6 mehrere einzelne Außen- bzw. Tragrohre AA1 bis AA4 als Abstützmittel insbesondere nahezu lückenlos, nacheinander entlang der Speicherstrecke TS angeordnet, die den Speicherkörper KS1 jeweils umgeben und nach außen hin abstützen. Sie sind vorzugsweise teilbar ausgebildet, so daß sie zum Einlegen der Verseilelemente in die Führungskanäle weggeklappt werden können. Die Tragrohre AA1 bis AA4 werden vorzugsweise so aufgehängt bzw. gelagert und angetrieben, daß sie der jeweiligen Drehbewegung des ihnen zugeordneten Speicherkörper-Abschnitts möglichst genau nachfolgen, um die Relativbewegung (Schlupf) zwischen dem jeweiligen Speicherkörper-Abschnitt und der zugehörigen Rohrwandung möglichst gering zu halten. Die Tragrohre AA1 bis AA4 werden aus diesem Grund mit unterschiedlichen Drehzahlen n1 bis n4 abschnittsweise rotierend angetrieben, wobei sie jeweils synchron zur Tordiervorrichtung TV ihre Drehrichtung wechseln.

Figur 8 zeigt den Drehzahlverlauf n des Speicherkörpers KS1 entlang seiner Tordierstrecke TS zwischen der als Tordiersperre wirkenden Einlaufvorrichtung ELV und der Tordiervorrichtung TV. Der Drehzahlverlauf für den Speicherkörper KS1 ist in Figur 8 durch die ansteigende, strichpunktiert gezeichnete Gerade nKS gekennzeichnet. Da der Speicherkörper KS1 an seinem einlaufseitigen Ende verdrehfest fixiert ist, dreht er sich einlaufseitig nicht, d.h. er bleibt dort untordiert. In Durchlaufrichtung steigt dann die Drehzahl nKS des Speicherkörpers KS1 linear bis zur maximalen Drehzahl nKS = MAX an. Mit dieser maximalen Drehzahl rotiert das freie, ausgangsseitige Ende des Speicherkörpers KS1, da es dort weitgehend frei, ohne in Umlaufrichtung und/oder in Längsrichtung festgehalten zu werden, mit Hilfe der Tordiervorrichtung TV gezielt verdreht werden kann. Das freie Ende des Speicherkörpers KS1 dreht sich also mit der Drehzahl n5 = MAX des Tragrohrs AR5, angetrieben durch den Motor MO5. Die Drehzahlen n1 bis n4 der Tragrohre AA1 bis AA4 von Figur 7 werden nun so eingestellt, daß jeweils etwa in der Mitte des jeweiligen Tragrohrs die Tragrohr-Drehzahl nAR der Speicherkörper-Drehzahl nKS entspricht, so daß dort nahezu kein Schlupf auftritt. Die Rohrführungen AA1 - AA4 der vier-geteilten Tordierstrecke TS des Speicherkörpers KS1 von Figur 7 rotieren dann beispielsweise mit folgenden Drehzahlen n1 bis n4:
n1 = 0
n2 = 1/4 n5
n3 = 1/2 n5
n4 = 3/4 n5

Das einlaufseitig erste Tragrohr AA1 wird also mit der Drehzahl n1 = 0 betrieben, d.h. es steht fest, während die Tragrohre AA2 bis AA4 mittels Motoren MO2 bis MO4 entsprechend den Drehzahlen n2 bis n4 in Rotation versetzt werden. Durch die Angleichung der Führungsrohr-Drehzahlen n1 bis n4 an die jeweilige Speicherkörper-Drehzahl nKS wird somit weitgehend sichergestellt, daß der Verschleiß des Speicherkörpers KS1, insbesondere die Abnutzung dessen Stege, der Außenrohre oder eine Beanspruchung bzw. Beschädigung der Verseilelemente weitgehend reduziert wird. Gleichzeitig wird durch diese Maßnahme eine im wesentlichen gleichmäßige Torsion des Speicherkörpers KS1 erreicht, so daß sich die Umschlingungen der Verseilelemente gleichmäßig entlang der Speicherstrecke TS verteilen. In Figur 8 ergibt sich somit ein stufenförmiger Verlauf der Drehzahl n der Rohrführungen bzw. Tragrohre AA1 bis AA4 und AR5 mit den Rechteck-Stufen jeweils konstanter Drehzahl n1 bis n5. Allerdings verbleibt dabei aufgrund der endlichen Länge der Rohrführungen ein Restschlupf zu Beginn und am Ende der jeweiligen Rohrführung. In Figur 8 tritt beispielsweise ein Restschlupf Δs = nKS - n2 beim Außenrohr AR2 zum Speicherkörper KS1 auf.

Im Unterschied zu den mit dem Speicherkörper KS1 nicht gekoppelten (unverbundenen) Außenrohren der Figuren 1 mit 7 sitzen in Figur 9 Abstützelemente bzw. Abdeckmittel AD1 bis AD4 abschnittsweise mit Abstand zueinander auf dem Speicherkörper KS1. Diese sind mit ihm fest verbunden und rotieren deshalb mit ihm synchron. Mindestens ein Abstützelement wie z.B. AD1 bis AD4, umgibt den jeweiligen Speicherkörper-Abschnitt konzentrisch. Es bildet also jeweils eine Art Führungsrohr. Zwischen jeweils zwei benachbarten Abstützelementen wie z.B. AD1 und AD2 verbleibt jeweils vorzugsweise eine Lücke, d.h. dort sind die Kammern KA1 bis KA4 nicht abgedeckt, sondern radial nach außen offen und somit im Betrieb sowie im Montagefall weitgehend frei zugänglich. Zur formschlüssigen Mitnahme (Kopplung) weisen die Abstützelemente AD1 bis AD4 jeweils vier nasenförmige bzw. stegartige Ausbuchtungen AE11 bis AE14, AE21 bis AE24, AE31 bis AE34 sowie AE41 bis AE44 auf. Diese Ausbuchtungen wie z.B. AE11 bis AE14 greifen jeweils im wesentlichen paßförmig bzw. formschlüssig in die Kammeröffnungen KA1 bis KA4 entsprechend den Mitnehmerelementen ME1 bis ME4 der Tordiervorrichtung TV ein. Sie liegen also an den Kammerwandungen ihrer jeweiligen Kammer (entsprechend den Mitnehmerelemten ME1 bis ME4 der Tordiervorrichtung TV) im wesentlichen formschlüssig an und werden somit bei der Tordierung des Speicherkörpers KS1 in die jeweilige Drehrichtung synchron mitgenommen. Es besteht also jeweils eine feste Kopplung zwischen dem Speicherkörper und den Abstützelementen bzw. Abdeckmitteln. Die mitgenommenen Abstützelemente AD1 bis AD4 sind jeweils in Lagern LA1 bis LA4, vorzugsweise Luftlagern, feststehender Abstützungen AS1 bis AS4 gehalten, so daß der Speicherkörper KS1 nach außen hin abgestützt ist. Die Abstützelemente AD1 bis AD4 mit den Lagerungen LA1 bis LA4 werden vorteilhaft in Abständen zwischen 1 und 2 m voneinandern angebracht. Das Lager LA5 für die Tordiervorrichtung TV selbst ist in einer feststehenden Abstützung AS5 vorgesehen. Ein Abstützelement erstreckt sich dabei vorzugsweise zwischen 30 und 50 mm in Längsrichtung. Auf diese Weise bleibt der Speicherkörper KS1 zumindest bereichweise offen, was seine Handhabbarkeit durch die freie Zugänglichkeit wesentlich erleichtert. Insbesondere sind die Abstützelemente ringförmig ausgebildet, d.h. der größte Teil der Speicherstrecke verbleibt nach außen hin offen.

Die Abstützelemente AD1 bis AD4 bilden zudem bereichsweise Abdeckungen für die offenen Kammern KA1 bis KA4. Sie schließen diese also nur bereichsweise rohrförmig ab, wodurch die Verseilelemente VE1 bis VE4 dennoch stets in den Kammern gehalten und geführt sind. Dabei halten die stegartigen Ausbuchtungen bzw. Mitnehmerelemente der Abstützelemente AD1 bis AD4 die Verseilelemente VE1 bis VE4 in definierter Weise jeweils am Kammergrund fest, so daß den Verseilelementen VE1 bis VE4 in Abständen jeweils immer wieder entlang der Tordierstrecke eine definierte Führung vorgegeben ist. Zusätzlich oder unabhängig hiervon werden durch die Lagerung der Abstützelemente z.B. ein Durchhängen, unzulässig große Schwingungen oder Ausknickungen des Speicherkörpers KS1 weitgehend vermieden.

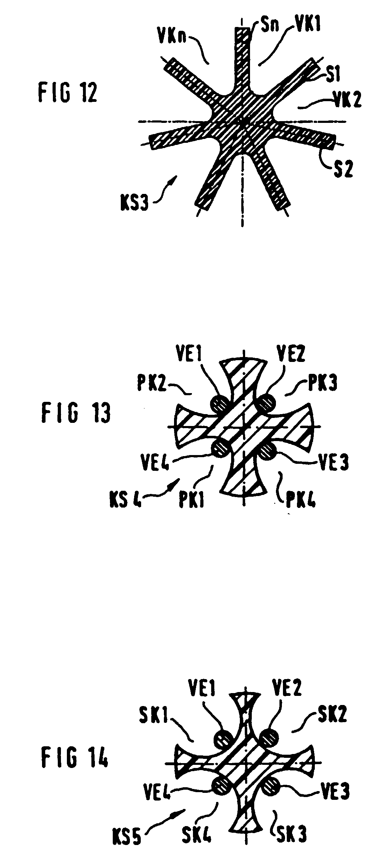

Figur 11 zeigt einen zu Figur 10 abgewandelten Speicherkörper KS2, in dessen Profil zusätzlich Verstärkungselemente VE vorgesehen sind. Unverändert übernommene Elemente auss Figur 10 sind in Figur 111 jeweils mit den gleichen Bezugszeichen versehen. Diese verleihen dem Speicherkörper KS2 eine zusätzliche Steifigkeit, so daß er sich entlang seiner Speicherstrecke gleichmäßig tordieren läßt, d.h. die Kammern verlaufen bei der Tordierung gleichmäßig verteilt um die Längsachse des Speicherkörpers in Durchlaufrichtung. Als Material für die Verstärkungselemente VE kommt vorzugsweise glasfaserverstärkter Kunststoff (GFK) bzw. Aramid in Frage, das zweckmäßigerweise In Längsrichtung faden-, bandförmig oder in sonstiger Weise in das Material des Speicherkörpers KS2 bei dessen Fertigung, insbesondere Extrusion, eingelagert werden kann.

Zweckmäßig kann es gegebenenfalls auch sein, jeweils am äußeren Ende der sich radial nach außen erstreckenden Stege ST1 bis ST4 Rückhalteelemente RE1 bis RE4 anzubringen. Sie sind in Figur 11 strichpunktiert angedeutet. Die Rückhalteelemente RE1 bis RE4 sind jeweils als vorzugsweise bogenförmige Stege ausgebildet, die jeweils zu beiden Seiten in die jeweilige Kammeröffnung hineinragen und diese teilweise abdecken. Vorzugsweise verlaufen die Rückhalteelemente in Form eines Kreisbogenabschnitts, d.h. sie liegen auf einem gedachten Teilkreis. Beispielsweise wird die Kammer KA2 im Bereich ihrer Kammerwandungen (Stege ST1, ST2) von der jeweils der Kammer KA2 zugewandten Hälfte des Rückhalteelements RE1 sowie des Rückhalteelements RE2 teilweise abgedeckt. Es verbleibt also etwa in der Mitte der Öffnung der Kammer KA2 eine Lücke bzw. Spalt, so daß die Kammer KA2 trotzdem noch frei zugänglich bleibt. Mit Hilfe der Rückhalteelemente RE1 bis RE4 wird weitgehend sichergestellt, daß die Verseilelemente ihre Kammern bei etwaig wirksam werdenden Zentrifugalkräften nicht verlassen und in unzulässige Positionen gelangen können. Vorzugsweise halten die Rückhalteelemente RE1 bis RE4 diejenigen Verseilelemente zurück, die sich jeweils im Bereich der beiden Kammerwandungen bzw. Stege z.B. ST1, ST2 einer Kammer z.B. KA2 nach außen bewegen. Die Rückhalteelemente RE1 bis RE4 bilden also nicht etwa einen vollständig geschlossenen Außenmantel in Form eines kreiszylinderförmigen Außenrohres, sondern weisen um den Umfang gesehen jeweils etwa mittig zur jeweiligen Kammer Lücken L1 bis L4 auf. Zweckmäßigerweise erstrecken sich die Rückhalteelemente RE1 bis RE4 im untordierten Zustand des Speicherkörpers KS2 in Längsrichtung über die volle Speicherkörper-Länge. Zweckmäßig kann es aber auch sein, in Durchlaufrichtung nur in Abständen Rückhalteelemente RE1 bis RE4 abschnittsweise an den Stegen ST1 bis ST4 anzubringen. Die Rückhalteelemente RE1 bis RE4 sind vorzugsweise elastisch ausgebildet. Sie weisen insbesondere gegenüber dem Speicherkörper KS1 eine verringerte Eigensteifigkeit auf. Genauso kann es zweckmäßig sein, die Rückhalteelemente RE1 bis RE4 gemeinsam mit dem Speicherkörper von Figur 10 zu extrudieren.

Figur 12 zeigt einen zu Figur 10 abgewandelten, n-geteilten Speicherkörper KS3 für n zu verseilende Verseilelemente mit n Kammern bzw. Kanälen VK1 bis VKn, die jeweils durch Stege S1 bis Sn voneinander getrennt sind. Die Kammern VK1 bis VKn weisen vorzugsweise jeweils ein etwa V-förmiges bzw. sektorförmiges Profil im Querschnitt auf, wobei der jeweilige Kammerboden zur zuverlässigen und sicheren Führung der Verseilelemente mit einer abgerundeten Innenkontur versehen ist.

Der zu Figur 10 abgewandelte, rotationssymmetrische Speicherkörper KS4 von Figur 13 weist Kammern PK1 bis PK4 mit etwa parabelförmiger Querschnittsform auf, die in einen kreiszylinderförmigen Ausgangsksörper eingelassen werden. Dadurch können die vorzugsweise runden, bevorzugt kreiszylinderförmigen Verseilelemente VE1 bis VE4 mit weiterer verringerter Reibungskraft an den Kammerwänden abrollen. Weiterhin ergibt sich für den Speicherkörper KS4 gegenüber dem Speicherkörper KS1 von Figur 10 eine verbesserte Eigensteifigkeit, da die Stege außen (in Umfangsrichtung) breiter als innen sind.

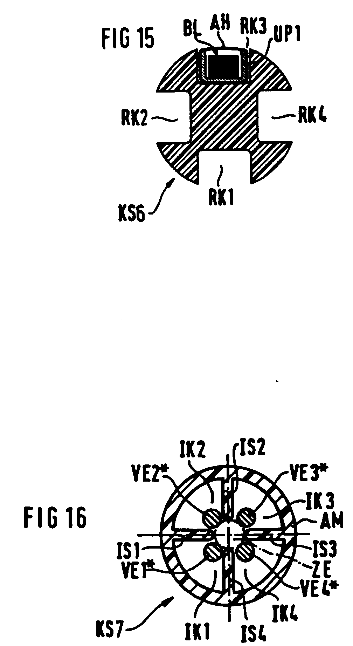

In Figur 14 ist als weitere Alternative zum Speicherkörper KS1 von Figur 10 ein rotationssymmetrischer Speicherkörper KS5 mit etwa schalenförmigen Kammern SK1 bis SK4 dargestellt. Die Kammern SK1 bis SK4 weisen als Innenrand bzw. Innenkontur etwa die Form eines Kreisbogenabschnitts auf, d.h. in einen ursprünglich kreiszylinderförmigen Strang sind um den Umfang gleichmäßig verteilt halbkreisförmige Aussparungen als Führungskanäle eingelassen. Dies verbessert ebenfalls gegenüber Figur 10 das Abrollverhalten der vorzugsweise runden Verseilelemente VE1 bis VE4.

Figur 15 zeigt als weitere Variante des Speicherkörpers KS1 von Figur 10 einen Speicherkörper KS6, in dessen ursprünglich kreiszylinderförmigen Querschnittsprofil etwa rechteckförmige bzw. U-förmige, nach außaen offene Kammern RK1 bis RK4 eingelassen sind. Diese etwa rechteckförmigen Kammern RK1 bis RK4 eignen sich vorzugsweise z.B. zur Verseilung rechteckförmiger bzw. U-förmiger Lichtwellenleiter-Bändchenstapel oder z.B. pel von U-Profilelementen mit eingelegten Bändchenstapeln. Der Übersichtlichkeit halber ist in Figur 15 lediglich in der insbesondere radial nach außen offenen Kammer RK3 ein mit einem Lichtwellenleiter-Bändchenstapel BL belegtes U-Profilelement UP1 eingezeichnet. Das U-Profilelement UP1 ist dabei vorzugsweise mit einer etwa rechteckförmigen Hülle AH ringsum umgeben. Das U-Profilelement UP1 wird vorteilhaft zumindest vollständig von der Kammer RK3 aufgenommen, so daß es nicht aus der Kammeröffnung herausragt. Dazu weist die Kammer RK3 eine Kammerquerschnittsform auf, die im wesentlichen der Querschnittsform des Verseilelements entspricht, d.h. die jeweilige Kammer ist bezüglich ihrer Tiefe in radialer Richtung und ihrer Breite in Umfangsrichtung an die Dimensionierung des jeweils zugeordneten Verseilelements angepaßt. Vorzugsweise kann die Kammer RH3 so dimensioniert werden, daß das U-Profilelement UP1 mit einem Freiraum (radiales Spiel) zum Außendurchmesser des Speicherkörpers in der Kammer RK3 versenkt ist. Das radiale Spiel kann zweckmäßig um etwa 0,3 mm gewählt sein. Zu den Kammerwänden weist das U-Profilelement UP1 vorzugsweise ein seitliches Spiel (Freiraum in Umfangsrichtung) auf, insbesondere 0,25 mm je Seite. Der Kammerquerschnitt ist also zweckmäßigerweise etwas größer als der Profilquerschnitt des jeweiligen Verseilelements gewählt, um den Abzug des Verseilelements durch seinen zugeordneten Kanal möglichst reigungsarm durchführen zu können.

Insgesamt betrachtet kann es somit gegebenenfalls auch zweckmäßig sein, die Kammern im wesentlichen an die Querschnittsform des jeweiligen Verseilelements anzupassen. Insbesondere bei der Verseilung nichtrunder Elemente wie z.B. mit sektor-, trapez-, rechteckförmiger Querschnittsform weisen die Führungskanäle bzw. Kammern annäherungsweise korrespondierende Kammerquerschnitte zu diesen auf. Dadurch ist insbesondere eine Verseilung ohne Rückdrehung ermöglicht. Selbstverständlich ist es gegebenenfalls auch möglich, die Kammern bzw. Kanäle so groß zu dimensionieren, daß die nichtrunden Verseilelemente selbst wiederum frei drehbar sind, folglich zumindest teilweise rückdrehen und damit weitgehend eigentorsionsfrei verseilt werden können. Dazu weisen die Kanäle zweckmäßigerweise Querschnittsformen wie die der Kanäle in den Figuren 10 mit 14 auf, d.h. eine runde Innenkontur, um die Eigendrehung der Verseilelemente zu ermöglichen bzw. zu erleichtern. Vorzugsweise gelten dabei ähnliche Verhältnisse von Verseilelement-Größe zu Kammer-Größe wie für die Verseilelemente in den Kammern der Speicherkörper 1 mit 14.

Figur 16 zeigt einen weiteren zu Figur 10 abgewandelten, rotationssymmetrischen Speicherkörper KS7, der radial nach innen offene Kammern IK1 bis IK4 aufweist. Diese Kammern IK1 - IK4 sind um den Umfang gesehen außen breiter als innen. Für die Kammern IK1 bis IK4 ist insbesondere ein etwa kreissektorförmiger bzw. trapezförmiger Querschnitt vorgesehen. Sie sind durch Stege IS1 bis IS4 voneinander getrennt, die sich vom kreiszylinderförmigen Außenmantel AM des Speicherkörpers KS7 aus radial nach innen hin erstrecken. Die Stege IS1 bis IS4 enden jedoch nicht im Mittelpunkt bzw. Zentrum des Speicherkörpers KS7 (im Querschnittsbild von Figur 16), sondern davor, so daß die Kammern IK1 bis IK4 nach innen hin offen bleiben. Zusätzlich kann im Zentrum des Speicherkörpers KS7 ggf. ein sich in Durchlaufrichtung erstreckendes Zentralelement ZE vorgesehen sein, das die nach innen hin offenen Kammern IK1 bis IK4 nach innen hin abdeckt. Das Zentralelement ZE ist in Figur 16 strichpunktiert angedeutet. Als Zentralelement ZE kann bevorzugt ein in Durchlaufrichtung abgezogenes Verseilelement wie z.B. ein elektrisches und/oder optisches Übertragungselement, insbesondere mit kreisrunden Querschnitt wie z.B. ein runder Leiter vorgesehen sein. Auf diesem können die konzentrisch um ihn angeordneten Verseilelemente im Normalbetrieb abrollen und schließlich im Verseilnippel aufgeseilt werden. Auf diese Weise werden die mit VE1* bis VE4* bezeichneten Verseilelemente auch bei einer drehachsennahen Lage bzw. Führung vor einem Verlassen ihrer Kammer zurückgehalten und getrennt voneinander geführt. Zum Einlegen der Verseilelemente VE1* bis VE4* ist der Speicherkörper KS7 vorteilhaft in zwei Halbschalen auseinandernehmbar bzw. aufklappbar.

Mittels der erfindungsgemäßen Einrichtung sowie dem zugehörigen Verfahren lassen sich bei entsprechend ausgebildetem Speicherkörper vielfältige Arten runder sowie nicht runder Verseilelemente verseilen. Als Verseilelemente kommen vorzugsweise elektrische und/oder optische Übertragungselemente unterschiedlicher Größen, Formen und Aufbauten in Frage. Dies können beispielsweise elektrische Leiter (Adern), elektrische Bandleitungen, optische Leiter (wie z.B. Lichtwellenleiter, Hohladern, Bündeladern), Lichtwellenleiter-Bändchen, Lichtwellenleiter-Bändchenstapel, U-Profilelemente mit Lichtwellenleitern, usw. sein. Mit dem erfindungsgemäßen Speicherkörper lassen sich aufgrund der günstigen dynamischen Eigenschaften vorteilhaft hohe Rotationsgeschwindigkeiten erreichen, insbesondere zwischen 1500 und 2000 1/min.

Gegebenenfalls kann es auch zweckmäßig sein, in eine Kammer jeweils mehr als ein Verseilelement einzulegen. Dies kommt insbesondere dann in Frage, wenn sehr viele Verseilelemente vorzuverseilen sind und der Speicherkörper-Querschnitt für eine Aufteilung in n Einzelführungs-Kanäle für n Verseilelemente nicht mehr ausreicht. Dann sind pro Kammer bzw. Kanal zweckmäßigerweise mindestens zwei Verseilelemente zu führen, so daß durch jeden Kanal eine Mehrfach-Führung gebildet ist. Die mehreren Verseilelemente in jedem Kanal können dabei vorteilhaft jeweils einzel lose nebeneinander oder z.B. aber auch bevorzugt miteinander vorab verseilt, zu einem Bündel zusammengefaßt, zu einer Bandleitung mechanisch miteinander verbunden oder in sonstiger Weise geführt sein.

Alternativ zum Betrieb des Speicherkörpers als Torsionsstab kann eine SZ-Verseilung auch dadurch erreicht werden, daß der Speicherkörper bezüglich seiner Längserstreckung frei drehbar gelagert und mit wechselnder Drehrichtung angetrieben wird. In Figur 1 entfällt dann beispielsweise die Fixiervorrichtung FV und wird vorzugsweise durch ein Lager ersetzt, so daß der Speicherkörper auch an seinem einlaufseitigen Ende drehbar gelagert ist. Gegebenenfalls kann dort auch ein zusätzlicher Antrieb vorgesehen sein, der zweckmäßigerweise synchron zum Motor MO5 der Vorrichtung TV betrieben ist. Werden dabei diese beiden Antriebe mit voneinander verschiedenen Drehzahlen und/oder Drehrichtungen betrieben, so ergibt sich wiederum vorteilhaft eine Torsion des Speicherkörpers, die die beschleunigte Umkehr von einer Drehrichtung zur anderen ermöglicht. Eine gleichmäßige Rotationsbewegung mit wechselnder Drehrichtung des Speicherkörpers kann selbstverständlich auch dadurch sichergestellt werden, daß der Speicherkörper zusätzlich oder unabhängig zu seiner endseitigen Dreh-Lagerung auch weitere Lagerstellen und/oder zugehörige Antriebe zwischen seinem einlaufseitigen und seinem ausgangsseitigen Ende aufweist. Zweckmäßigerweise ist die Einlegevorrichtung ELV von Figur 1 bei freier Drehlagerung des gesamten Speicherkörpers nicht feststehend ausgebildet, sondern drehgelagert, wobei sie an den rotierenden Speicherkörper gekoppelt ist und in die jeweilige Drehrichtung jeweils mitgenommen wird. Gegebenenfalls kann es auch zweckmäßig sein, die Kammern bzw. Kanäle wendelförmig um die Längsachse des Speicherkörpers einzulassen.

Weiterhin ist es auch möglich, den Speicherkörper gemäß den Figuren 1 mit 16 zur Gleichschlagverseilung oder sonstigen Verseilungsarten einzusetzen. So wird z.B. bei Gleichschlagverseilung der Speicherkörper nicht mehr als Torsionsstab bzw. Torsionsfeder betrieben, sondern beispielsweise jeweils an seinen beiden Enden drehbar gelagert und/oder dort jeweils eigens rotierend angetrieben. Zweckmäßigerweise können dazu die offenen Kammern im Speicherkörper derart eingelassen sein, daß sie im Ruhezustand des Speicherkörpers wendelförmig um dessen Längsachse verlaufen. Auf der linken Seite von Figur 1 wird zweckmäßigerweise die Klemmvorrichtung KV z.B. durch eine Drehvorrichtung, insbesondere einem Lager mit zugeordneten Motor ersetzt, der mittels eines Zahnriemens eine am Speicherkörper fest angebrachtes Zahnrad antreibt. Diese eingangsseitige Drehvorrichtung wird zur Gleichschlagverseilung zweckmäßigerweise mit der gleichen Drehzahl sowie stets in die gleiche Drehrichtung wie die ausgangsseitige Vorrichtung TV, d.h. synchron zu letzterer, angetrieben. Eine eingangsseitige drehbare Lagerung ohne eigenen Antrieb ist ebenso anstelle der Fixiervorrichtung FV möglich. Während des Betriebes werden dann die Verseilelemente in den vorzugsweise wendelförmig verlaufenden Kanälen bzw. Kammern geführt. Die Einlegevorrichtung ELV ist dabei zweckmäßigerweise nicht feststehend, sondern bevorzugt so ausgebildet, daß sie fest auf dem Speicherkörper mit ihren in die Kammern eingreifenden Stegen aufsitzt und dadurch in Drehrichtung mitgenommen wird.

Durch Vorgabe nicht geradliniger, sondern weiterer andersartiger Verläufe wie z.B. in Wendel-, Helixform, Schraubenlinienform, usw. der zumindest bereichs- bzw. abschnittsweise oder ganz offenen Kanäle (Kammern) im Mantel des Speicherkörpers ist es weiterhin möglich, das erfindungsgemäße Verfahren für vielfältige Anwendungen wie z.B. Gleichschlagverseilung/SZ-Verseilung einzusetzen.

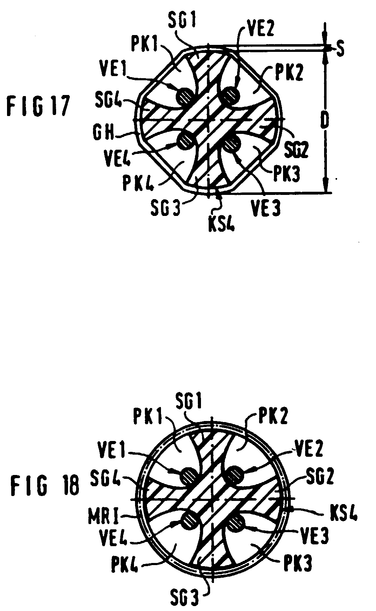

Figur 17 zeigt in vergrößerter Darstellung schematisch im Querschnitt den Speicherkörper KS4 von Figur 13 mit einer zusätzlichen äußeren Hülle GH. Diese Hülle GH umgibt den Speicherkörper KS4 ringsum, wobei sie an den Stirnseiten der Stege SG1 mit SG4 fest anliegt. Die jeweilige Kammer PK1 mit PK4 wird von ihr jeweils weitgehend geradlinig von einem Stegende zum nächsten überbrückt bzw. überspannt, um einem Aufbauchen nach außen während der Rotationsbewegung möglichst entgegenzuwirken. Auf diese Weise umrahmt die äußere Hülle GH den Speicherkörper KS4 näherungsweise mit dem Verlauf eines "4er-Polygons", das in seinen gedachten Ecken jeweils von einem Steg als Stützpfeiler radial nach innen hin abgestützt wird. Für die äußere Hülle GH ist vorteilhaft ein Material gewählt, das elastischer als der Werkstoff des Speicherkörpers KS4 ist. Vorteilhaft ist für die äußere Hülle GH ein elastisches Material, insbesondere ein Elastomer wie z.B. Polyurethan (PU), mit einer Shorezahl < 60 (nach DIN 53505) verwendet. Vorzugsweise ist die Hülle GH gummielastisch ausgebildet. Eine derartig dehnbare, äußere Hülle GH sorgt vorteilhaft dafür, daß die Verseilelemente VE1 mit VE4 stets getrennt voneinander in ihren zugeordneten Kanälen PK1 mit PK4 geführt werden. Dabei bleibt die ursprünglich torsionswiderstandsarm ausgelegte Struktur des Speicherkörpers KS4 von der zusätzlich aufgebrachten Hülle GH weitgehend unbeeinträchtigt. Die Hülle GH wird vorzugsweise im Schlauchreckverfahren als Überzug auf den Speicherkörper KS4 aufextrudiert. Vorzugsweise ist die Hülle GH jeweils mit den Stirnseiten der Stege SG1 mit SG4 fest verbunden, insbesondere verklebt oder verschweißt. Zweckmäßig kann es auch sein, die Hülle GH gegenüber ihrem ungedehnten Ausgangszustand aufzudehnen, so daß sie den Speicherkörper als loser Überzug umspannt und unter ihrer Rückdehnkraft auf den Stegen des Speicherkörpers KS4 gespannt festsitzt. Die Hülle GH weist zweckmäßigerweise eine Wandstärke s auf, die zwischen dem 1/25 und 1/40 des Durchmessers D des Speicherkörpers KS4 liegt. Insbesondere ist die Wandstärke S zwischen 0,3 - und 0,5 mm gewählt.

Ein derartiger Überzug GH kann vorteilhaft den jeweiligen Speicherkörper, wie z.B. entsprechend den Figuren 1 mit 15 möglichst entlang dessen gesamter Sspeicherstrecke umgeben. Genauso kann es gegebenenfalls auch bereits ausreichend sein, nur einzelne, nichtmetallische Ringe entsprechender vieleckförmiger Kontur als Abdeckmittel in Abständen voneinander entlang der Längserstreckung des Speicherkörpers vorzusehen, so daß der größte Teil des Speicherkörpers unabgedeckt bleibt. Als nichtmetallischer Werkstoff ist vorzugsweise Kunststoff, insbesondere ein gummielastisches Material wie z.B. PU oder Teflon sowie sonstige reibungsarme sowie verschleißfeste Materialien verwendet.

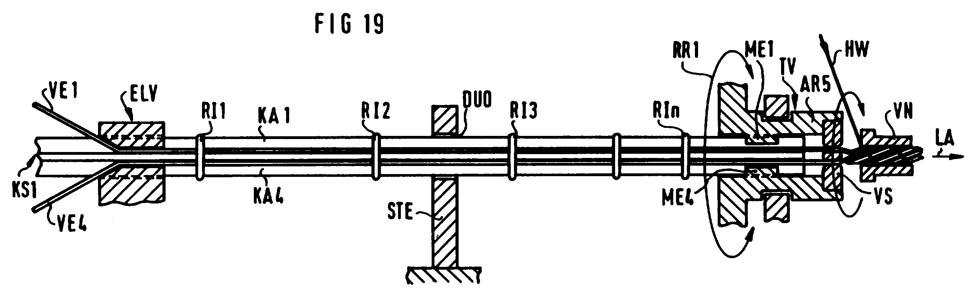

Figur 19 zeigt schematisch z.B. den Speicherkörper KS1 von Figur 1 mit solchen einzelnen Ringen RI1 mit RIn. Dabei sind zweckmäßigerweise auslaufseitig auf die Tordiervorrichtung TV zu mehr Ringe als einlaufseitig angeordnet, da die Rotationsgeschwindigkeit des Speicherkörpers KS1 von Figur 19 zum auslaufseitigen, freien Ende hin zunimmt, d.h. in Durchlaufrichtung LA betrachtet nimmt der Abstand jeweils zweier aufeinander folgender Ringe ab.

Zweckmäßigerweise ist zur axialen Lagesicherung der Ringe RI1 mit RIn jeweils eine Ringnut am Außenumfang des Speicherkörpers KS1 vorgesehen, so daß eine Art Sprengringsicherung in axialer Richtung gebildet ist. Durch die Ringe RI1 mit RIn ist weitgehend sichergestellt, daß die Verseilelemente VE1 mit VE4 stets, d.h. im Betrieb sowie im Montagefall, in ihren Führungskanälen KA1 mit KA4 verbleiben, wobei dennoch zugleich die freie Zugänglichkeit der Kanäle KA1 mit KA4 weitgehend erhalten bleibt. Auf diese Weise können insbesondere neue Verseilelemente in einfacher Weise in die Führungskanäle eingelegt werden.

Gegebenenfalls kann es zweckmäßig sein, den langgestreckten Speicherkörper KS1 zwischen seiner Einlegevorrichtung ELV und seiner Tordiervorrichtung an mindestens einer Stelle zusätzlich radial von außen abzustützen, um ein etwaiges Durchhängen des Speicherkörpers möglichst zu vermeiden. In Figur 19 ist beispielsweise in der Mitte der Speicherstrecke eine Stütze bzw. Auflage STE, insbesondere ein Lager, für den Speicherkörper KS1 angeordnet. Sie weist eine kreiszylinderförmige Durchlaßöffnung DUO für den Speicherkörper auf, wobei der Innendurchmesser der Öffnung DUO etwa dem Außendurchmesser des Speicherkörpers KS1 entspricht.

Zweckmäßig kann es gegebenenfalls auch sein, für die Ringe RI1 mit RIn einen metallischen Werkstoff vorzusehen. Insbesondere sind diese Ringe innenseitig mit einer reibungsarmen, verschleißfesten Beschichtung wie z.B. Teflon überzogen. Auf diese Weise wird ein etwaiger Abrollvorgang der Verseilelemente aus der Innenwand des jeweiligen Rings begünstigt.

Figur 18 zeigt schließlich einen zu Figur 17 abgewandelten Führungsring MRI mit kreisrunder Kontur, der z.B. auf den Stegen SG1 mit SG4 des Speicherkörpers KS4 von Figur 13 aufsitzt. Vorzugsweise ist er mit etwas radialem Spiel auf dem Speicherkörper KS4 aufgebracht, so daß er in Umfangsrichtung verdrehbar ist. In axialer Richtung ist er vorzugsweise durch eine Sprengnut lagegesichert, die in Umfangsrichtung in die vier Stege SG1 mit SG4 des Speicherkörpers KS4 stirnseitig eingelassen ist. Für den Führungsring MRI ist vorzugsweise ein metallischer, steifer Werkstoff ausreichender Formstabilität gewählt. Weiterhin kann gegebenenfalls auch ein steifer Kunststoff oder dergleichen für ihn verwendet sein. Weiterhin gelten im übrigen für die Führungssringe gemäß den Figuren 17 mit 19 die zu den Abdeckmitteln der Figuren 1 sowie 6 mit 9 gestroffenen Aussagen. Insbesondere kann entsprechend zu Figur 9 z.B. den Führungsringen RI1 mit RIn von Figur 19 jeweils eine eigene Antriebseinrichtung, vorzugsweise ein Motor, zugeordnet werden, wobei die Führungsringe um die Verseilachse drehbar gelagert sind. Gegebenenfalls können die Führungsringe auch fest an den Speicherkörper gekoppelt sein.

## Patentansprüche

1. Einrichtung zur Verseilung langgestreckter Verseilelemente (z.B. VE1 bis VE4) unter Verwendung eines sich in Längsrichtung erstreckenden, rotierenden Speicherkörpers (KS1), über den die Verseilelemente (z.B. VE1 bis VE4) einer Verseilscheibe (VS) zugeführt sind,
**dadurch gekennzeichnet**,
daß der Speicherkörper (KS1) radial nach außen oder innen offene Kammern (KA1 bis KA4) aufweist, die sich in Längsrichtung (LA) des Speicherkörpers (KS1) erstrecken und der Aufnahme der Verseilelemente (VE1-VE4) dienen.

2. Einrichtung nach Anspruch 1,
**dadurch gekennzeichnet**,
daß sich die Kammern (KA1 bis KA4) des Speicherkörper (KS1) geradlinig in Längsrichtung (LA) erstrecken.

3. Einrichtung nach einem der vorhergehenden Ansprüche,
**dadurch gekennzeichnet**,
daß am Speicherkörper (KS1) eine Fixiervorrichtung (FV) vorgesehen ist, mittels der der Speicherkörper (KS1) verdrehfest festgehalten ist.

4. Einrichtung nach einem der vorhergehenden Ansprüche,
**dadurch gekennzeichnet**,
daß eine Einlaufvorrichtung (EV) für die Verseilelemente (z.B. VE1 bis VE4) vorgesehen ist.

5. Einrichtung nach einem der vorhergehenden Ansprüche,
**dadurch gekennzeichnet**,
daß eine Einlegevorrichtung (ELV) zum Einlegen der Verseilelemente (VE1 bis VE4) in die Kammern (KA1 bis KA4) des Speicherkörpers (KS1) vorgesehen ist.

6. Einrichtung nach einem der vorhergehenden Ansprüche,
**dadurch gekennzeichnet**,
daß die Querschnittsform der Kammern (KA1 bis KA4) größer als der Profilquerschnitt der Verseilelemente (VE1-VE4) gewählt ist.

7. Einrichtung nach einem der vorhergehenden Ansprüche,
**dadurch gekennzeichnet**,
daß im Querschnitt betrachtet zwischen den Kammern (KA1 bis KA4) im wesentlichen radial verlaufende Trennelemente (ST1-ST4) vorgesehen sind.

8. Einrichtung nach einem der vorhergehenden Ansprüche,
**dadurch gekennzeichnet**,
daß der Speicherkörper (KS1) im Querschnitt betrachtet sternförmig ausgebildet ist.

9. Einrichtung nach einem der vorhergehenden Ansprüche,
**dadurch gekennzeichnet**,
daß die Öffnungen der Kammern (KA1 bis KAn) zumindest abschnittsweise mit mindestens einem Abdeckmittel (z.B. AR, A1-Am) entlang ihrer Längserstreckungen abgedeckt sind.

10. Einrichtung nach Anspruch 9,
**dadurch gekennzeichnet**,
daß als Abdeckmittel mindestens ein Außenrohr (AR) vorgesehen ist, das den Speicherkörper (KS1) konzentrisch umgibt.

11. Einrichtung nach Anspruch 10,
**dadurch gekennzeichnet**,
daß das Außenrohr (AR) jeweils kreiszylinderförmig ausgebildet ist.

12. Einrichtung nach Anspruch 10 oder 11,
**dadurch gekennzeichnet**,
daß sich das Außenrohr (AR) im wesentlichen über die gesamte Speicherstrecke (TS) des Speicherkörpers (KS1) erstreckt.

13. Einrichtung nach Anspruch 10 oder 11,
**dadurch gekennzeichnet**,
daß mehrere, in Längrichtung nebeneinander angeordnete Außenrohre (A1 bis Am) die Kammeröffnungen des Speicherkörpers (KS1) mit dazwischenliegenden Lücken (z.B. AS) abschnittsweise abdecken.

14. Einrichtung nach Anspruch 9,
**dadurch gekennzeichnet**,
daß das jeweilige Abdeckmittel (z.B. RI1 in Figur 19) als Führungsring ausgebildet ist.

15. Einrichtung nach einem den Ansprüchen 10 bis 14,
**dadurch gekennzeichnet**,
daß die Abdeckmittel (z.B. AR) jeweils feststehend angeordnet sind.

16. Einrichtung nach einem der Ansprüche 10 bis 14,
**dadurch gekennzeichnet**,
daß die Abdeckmittel (z.B. AA2) selbst jeweils drehbar angeordnet sind.

17. Einrichtung nach Anspruch 16,
**dadurch gekennzeichnet**,
daß die Abdeckmittel (z.B. AD1) an den rotierenden Speicherkörper (KS1) gekoppelt sind.

18. Einrichtung nach einem der Ansprüche 16 oder 17,
**dadurch gekennzeichnet**,
daß für das jeweilige Abdeckmittel (z.B. AA2 bis AA4) eine Antriebseinrichtung (z.B. MO2 bis MO4) vorgesehen ist.

19. Einrichtung nach einem der vorhergehenden Ansprüche,
**dadurch gekennzeichnet**,
daß am Speicherkörper (KS1) eine Tordiervorrichtung (TV) vorgesehen ist.

20. Einrichtung nach Anspruch 19,
**dadurch gekennzeichnet**,
daß die Tordiervorrichtung (TV) Mitnehmerelemente (ME1 bis ME4) aufweist, die formschlüssig in die Kammern (KA1 bis KA4) eingreifen und den Speicherkörper (KS1) in die jeweils gewünschte Drehrichtung (RR1) mitnehmen.

21. Einrichtung nach einem der vorhergehenden Ansprüche,
**dadurch gekennzeichnet**,
daß der Speicherkörper (KS1) im untordierten Zustand eine Gesamtlänge zwischen 5 und 10 m, insbesondere zwischen 6 und 8 m aufweist.

22. Einrichtung nach einem der vorhergehenden Ansprüche,
**dadurch gekennzeichnet**,
daß die Tiefe der Kammern (KA1-KA4) zwischen 2 bis 8 mal, insbesondere zwischen 2,5 bis 4 mal, größer als die maximale Querschnittsbreite (Durchmesser) der Verseilelemente (VE1-VE4) gewählt ist.

23. Einrichtung nach einem der vorhergehenden Ansprüche,
**dadurch gekennzeichnet**,
daß die Kammerbreite um den Umfang gesehen mindestens um das 2-fache, insbesondere um das 6 bis 9-fache größer als die maximale Querschnittsbreite der Verseilelemente (VE1-VE4) gewählt ist.

24. Einrichtung nach einem der vorhergehenden Ansprüche,
**dadurch gekennzeichnet**,
daß als Verseilelemente (VE1 bis VE4) elektrische und/oder optische Übertragungselemente gewählt sind.

25. Verfahren zur Verseilung langgestreckter Verseilelemente (VE1 bis VE4) unter Verwendung eines sich in Längsrichtung erstreckenden, rotierenden Speicherkörpers, über den die Verseilelemente (VE1 bis VE4) einer Verseilscheibe (VS) zugeführt werden, insbesondere nach einem der vorhergehenden Ansprüche,
**dadurch gekennzeichnet**,
daß die Verseilelemente (VE1 bis VE4) in sich in Längsrichtung (LA) des Speicherkörpers (KS1) erstreckenden radial nach außen oder innen offenen Kammern (KA1 bis KA4) des Speicherkörpers (KS1) geführt werden.

26. Verfahren nach Anspruch 25,
**dadurch gekennzeichnet**,
daß der Speicherkörper (KS1) als Torsionsstab betrieben wird, und daß die Reversierung der Verseilscheibe (VS) durch die Federtorsion beschleunigt wird.

27. Verfahren nach einem der Ansprüche 25 oder 26,
**dadurch gekennzeichnet**,
daß die Kammern (KA1 bis KA4) nach dem Einlegen der Verseilelemente teilweise oder ganz frei von Abdeckmitteln (z.B. AR) gehalten werden.

28. Verfahren nach einem der Ansprüche 25 bis 27,
**dadurch gekennzeichnet**,
daß der Speicherkörper (KS1) mit wechselnder Drehrichtung (SZ-Verseilung) betrieben wird.

## Claims

1. Apparatus for stranding elongated stranding elements (for example VE1 to VE4) using a rotating accumulator (KS1) extending in the longitudinal direction, via which the stranding elements (for example VE1 to VE4) are fed to a stranding disc (VS), characterized in that the accumulator (KS1) has chambers (KA1 to KA4) which are open radially outwards or inwards, extend in the longitudinal direction (LA) of the accumulator (KS1) and serve for the accommodation of the stranding elements (VE1 - VE4).

2. Apparatus according to Claim 1, characterized in that the chambers (KA1 to KA4) of the accumulator (KS1) extend in a straight line in the longitudinal direction (LA).

3. Apparatus according to one of the preceding claims, characterized in that a fixing device (FV) is provided on the accumulator (KS1), by means of which the accumulator (KS1) is fixed in a rotationally fixed manner.

4. Apparatus according to one of the preceding claims, characterized in that an inlet device (EV) is provided for the stranding elements (for example VE1 to VE4).

5. Apparatus according to one of the preceding claims, characterized in that an insertion device (ELV) for inserting the stranding elements (VE1 to VE4) into the chambers (KA1 to KA4) of the accumulator (KS1) is provided.

6. Apparatus according to one of the preceding claims, characterized in that the cross-sectional shape of the chambers (KA1 to KA4) is selected to be larger than the profile cross section of the stranding elements (VE1 - VE4).

7. Apparatus according to one of the preceding claims, characterized in that, considered in cross section, separating elements (ST1-ST4) extending essentially radially are provided between the chambers (KA1 to KA4).

8. Apparatus according to one of the preceding claims, characterized in that the accumulator (KS1), considered in cross section, is designed in a star shape.

9. Apparatus according to one of the preceding claims, characterized in that the apertures of the chambers (KA1 to KAn) are covered over, at least in sections, with at least one covering means (for example AR, A1-Am) along their longitudinal extensions.

10. Apparatus according to Claim 9, characterized in that at least one outer tube (AR) is provided as covering means, which surrounds the accumulator (KS1) concentrically.

11. Apparatus according to Claim 10, characterized in that the outer tube (AR) is designed in each case to be of circular cylindrical shape.

12. Apparatus according to Claim 10 or 11, characterized in that the outer tube (AR) extends essentially over the entire accumulator path (TS) of the accumulator (KS1).

13. Apparatus according to Claim 10 or 11, characterized in that a plurality of outer tubes (A1 to Am) arranged alongside one another in the longitudinal direction cover the chamber apertures of the accumulator (KS1) in sections with gaps (for example AS) lying in between.

14. Apparatus according to Claim 9, characterized in that the respective covering means (for example RI1 in Figure 19) is designed as a guide ring.

15. Apparatus according to one of Claims 10 to 14, characterized in that the covering means (for example AR) are in each case arranged in a stationary manner.

16. Apparatus according to one of Claims 10 to 14, characterized in that the covering means (for example AA2) themselves are in each case arranged to be rotatable.

17. Apparatus according to Claim 16, characterized in that the covering means (for example AD1) are coupled to the rotating accumulator (KS1).

18. Apparatus according to either of Claims 16 or 17, characterized in that a drive device (for example MO2 to MO4) is provided for the respective covering means (for example AA2 to AA4).

19. Apparatus according to one of the preceding claims, characterized in that a twisting device (TV) is provided on the accumulator (KS1).

20. Apparatus according to Claim 19, characterized in that the twisting device (TV) has driver elements (ME1 to ME4), which engage in a positive manner in the chambers (KA1 to KA4) and drive the accumulator (KS1) in the desired direction of rotation (RR1) in each case.

21. Apparatus according to one of the preceding claims, characterized in that the accumulator (KS1) has, in the untwisted condition, a total length between 5 and 10 m, in particular between 6 and 8 m.

22. Apparatus according to one of the preceding claims, characterized in that the depth of the chambers (KA1-KA4) is selected to be between 2 to 8 times, in particular between 2.5 to 4 times, larger than the maximum cross-sectional width (diameter) of the stranding elements (VE1-VE4).

23. Apparatus according to one of the preceding claims, characterized in that the chamber width, seen around the periphery, is selected to be at least 2 times, in particular 6 to 9 times larger than the maximum cross-sectional width of the stranding elements (VE1-VE4).

24. Apparatus according to one of the preceding claims, characterized in that electrical and/or optical transmission elements are selected as stranding elements (VE1 to VE4).

25. Method for stranding elongated stranding elements (VE1 to VE4) using a rotating accumulator extending in the longitudinal direction, via which the stranding elements (VE1 to VE4) are fed to a stranding disc (VS), in particular according to one of the preceding claims, characterized in that the stranding elements (VE1 to VE4) are guided in chambers (KA1 to KA4) of the accumulator (KS1) which are open radially outwards or inwards and extend in the longitudinal direction (LA) of the accumulator (KS1).

26. Method according to Claim 25, characterized in that the accumulator (KS1) is operated as a torsion rod, and that the reversing of the stranding disc (VS) is accelerated by the spring torsion.

27. Method according to either of Claims 25 or 26, characterized in that the chambers (KA1 to KA4) are kept partially or wholly free of covering means (for example AR) after the insertion of the stranding elements.

28. Method according to one of Claims 25 to 27, characterized in that the accumulator (KS1) is operated with an alternating direction of rotation (SZ-stranding).

## Revendications

1. Dispositif pour toronner des éléments (par exemple VE1 à VE4) de toronnage s'étendant en longueur, en utilisant un élément (KS1) d'accumulation qui tourne, qui s'étend dans la direction longitudinale et par l'intermédiaire duquel les éléments (par exemple VE1 à VE4) de toronnage sont envoyés à un disque (VS) de toronnage, caractérisé en ce que l'élément (KS1) d'accumulation comporte des cavités (KA1 à KA4) ouvertes radialement vers l'extérieur ou vers l'intérieur, qui s'étendent dans la direction (LA) longitudinale de l'élément (KS1) d'accumulation et qui servent à recevoir les éléments (VE1 à VE4) de toronnage.

2. Dispositif suivant la revendication 1, caractérisé en ce que les cavités (KA1 à KA4) de l'élément (KS1) d'accumulation s'étendent rectilignement dans la direction (LA) longitudinale.

3. Dispositif suivant l'une des revendications précédentes, caractérisé en ce qu'il est prévu sur l'élément (KS1) d'accumulation un dispositif (FV) d'immobilisation, au moyen duquel l'élément (KS1) d'accumulation est fixé de manière à ne pas pouvoir tourner.

4. Dispositif suivant l'une des revendications précédentes, caractérisé en ce qu'il est prévu un dispositif (EV) d'entrée des éléments (par exemple VE1 à VE4) de toronnage.

5. Dispositif suivant l'une des revendications précédentes, caractérisé en ce qu'il est prévu un dispositif (ELV) de mise en place des éléments (VE1 à VE4) de toronnage dans les cavités (KA1 à KA4) de l'élément (KS1) d'accumulation.

6. Dispositif suivant l'une des revendications précédentes, caractérisé en ce que la forme de la section transversale des cavités (KA1 à KA4) est choisie plus grande que la section transversale du profil des éléments (VE1 à VE4) de toronnage.

7. Dispositif suivant l'une des revendications précédentes, caractérisé en ce qu'il est prévu des éléments (ST1 à ST4) de séparation s'étendant sensiblement radialement entre les cavités (KA1 à KA4), considéré en section transversale.

8. Dispositif suivant l'une des revendications précédentes, caractérisé en ce que l'élément (KS1) d'accumulation est, considéré en section transversale, en forme d'étoile.

9. Dispositif suivant l'une des revendications précédentes, caractérisé en ce que les ouvertures des cavités (KA1 à KAn) sont, sur leurs étendues longitudinales, recouvertes, au moins par parties, d'au moins un moyen (par exemple AR, A1 à Am) de recouvrement.

10. Dispositif suivant la revendication 9, caractérisé en ce qu'il est prévu comme moyen de recouvrement, au moins un tube (AR) qui entoure l'élément (KS1) d'accumulation.

11. Dispositif suivant la revendication 10, caractérisé en ce que le tube (AR) extérieur est cylindrique circulaire.

12. Dispositif suivant la revendication 10 ou 11, caractérisé en ce que le tube (AR) extérieur s'étend sensiblement sur toute la section (TS) de l'élément (KS1) d'accumulation.

13. Dispositif suivant la revendication 10 ou 11, caractérisé en ce que plusieurs tubes (A1 à Am) extérieurs, montés côte-à-côte dans la direction longitudinale, recouvrent par parties, en ayant des vides (par exemple AS) intermédiaires, les ouvertures des cavités de l'élément (KS1) d'accumulation.

14. Dispositif suivant la revendication 9, caractérisé en ce que le moyen (par exemple RI1 à la figure 19) de recouvrement associé est agencé en anneau de guidage.

15. Dispositif suivant l'une des revendications 10 à 14, caractérisé en ce que les moyens (par exemple AR) de recouvrement sont montés fixes.

16. Dispositif suivant l'une des revendications 10 à 14, caractérisé en ce que les moyens (par exemple AA2) sont eux-mêmes montés tournants.

17. Dispositif suivant l'une des revendications 10 à 14, caractérisé en ce que les moyens (par exemple AD1) sont couplés à l'élément (KS1) d'accumulation tournant.

18. Dispositif suivant l'une des revendications 16 ou 17, caractérisé en ce qu'il est prévu, pour le moyen (par exemple AA2 à AA4)) de recouvrement associé, un dispositif d'entraînement (par exemple MO2 à MO4).

19. Dispositif suivant l'une des revendications précédentes, caractérisé en ce qu'il est prévu sur l'élément (KS1) d'accumulation un dispositif (TV) de torsion.

20. Dispositif suivant la revendication 19, caractérisé en ce que le dispositif (TV) de torsion comporte des éléments (ME1 à ME4) d'entraînement, qui pénètrent avec complémentarité de forme dans les cavités (KA1 à KA4) et entraînent l'élément (KS1) d'accumulation dans le sens de rotation souhaité.

21. Dispositif suivant l'une des revendications précédentes, caractérisé en ce que l'élément (KS1) d'accumulation, lorsqu'il n'est pas tordu, à une longueur totale comprise entre 5 et 10 m, notamment entre 6 et 8 m.

22. Dispositif suivant l'une des revendications précédentes, caractérisé en ce que la profondeur des cavités (KA1 à KA4) est choisie entre 2 et 8 fois, notamment entre 2,5 et 4 fois, plus grande que la largeur maximum de section transversale (diamètre) des éléments (VE1 à VE4) de toronnage.

23. Dispositif suivant l'une des revendications précédentes, caractérisé en ce que la largeur des cavités est, vue sur le pourtour, choisie plus grande que la largeur maximum de section transversale (diamètre) des éléments (VE1 à VE4) de toronnage au moins du double, notamment de 6 à 9 fois.

24. Dispositif suivant l'une des revendications précédentes, caractérisé en ce que l'on choisit comme éléments (VE1 à VE4) de toronnage des éléments de transmission électriques et/ou optiques.

25. Procédé pour toronner des éléments (VE1 à VE4) de toronnage s'étendant en longueur, en utilisant un élément d'accumulation qui tourne, qui s'étend dans la direction longitudinale et par l'intermédiaire duquel les éléments (VE1 à VE4) de toronnage sont envoyés à un disque (VS) de toronnage, notamment suivant l'une des revendications précédentes, caractérisé en ce que les éléments (VE1 à VE4) de toronnage sont guidés dans des cavités (KA1 à KA4) de l'élément (KS1) d'accumulation, qui s'étendent radialement vers l'extérieur ou l'intérieur dans la direction (LA) longitudinale de l'élément (KS1) d'accumulation et qui sont ouvertes radialement vers l'extérieur ou l'intérieur.

26. Procédé suivant la revendication 25, caractérisé en ce que l'on fait fonctionner l'élément (KS1) d'accumulation en barre de torsion et en ce que l'inversion du disque (VS) de toronnage est accélérée par la torsion élastique.

27. Procédé suivant l'une des revendications 25 ou 26, caractérisé en ce que, après la mise en place des éléments de toronnage, les cavités (KA1 à KA4) sont maintenues partiellement ou totalement exemptes de moyens (par exemple AR) de recouvrement.

28. Procédé suivant l'une des revendications 25 à 27, caractérisé en ce que l'on fait fonctionner l'élément (KS1) d'accumulation en ayant un sens de rotation alterné (toronnage SZ).
